(19) Europäisches Patentamt
European Patent Office
Office européen des brevets

(11) **EP 4 708 710 A1**

(12) **EUROPEAN PATENT APPLICATION**
published in accordance with Art. 153(4) EPC

(43) Date of publication:
**11.03.2026 Bulletin 2026/11**

(21) Application number: **24822286.1**

(22) Date of filing: **01.03.2024**

(51) International Patent Classification (IPC):
**H04B 1/525** (2015.01)   **H04B 7/15** (2006.01)

(52) Cooperative Patent Classification (CPC):
**H04B 1/04; H04B 1/401; H04B 1/525; H04B 3/04;
H04B 5/77; H04B 7/15; H04W 4/40; H04W 4/44**

(86) International application number:
**PCT/CN2024/079649**

(87) International publication number:
**WO 2024/255328 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.06.2023 CN 202310704285**

(71) Applicant: **Huawei Technologies Co., Ltd.
Shenzhen, Guangdong 518129 (CN)**

(72) Inventors:
• **SHAN, Zheng
Shenzhen, Guangdong 518129 (CN)**
• **LU, Huiqi
Shenzhen, Guangdong 518129 (CN)**
• **TANG, Yuwei
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **T-BOX, RELAY, SIGNAL TRANSMISSION SYSTEM, AND VEHICLE**

(57) Embodiments of this application relate to the field of communication technologies, and provide a T-Box, a relay, a signal transmission system, and a vehicle, so that the T-Box can synchronously send a radio frequency signal and a control signal to the relay through a cable. A first branch in the T-Box includes a V2X circuit and a first radio frequency transmission circuit, and the first radio frequency transmission circuit is coupled between the V2X circuit and a first combination point. A second branch includes a first control signal end and a first radio frequency isolation circuit, the first radio frequency isolation circuit is coupled between the first control signal end and the first combination point, and the first control signal end outputs the control signal. A fourth branch in the relay includes a vehicle to everything V2X signal end and a bidirectional switch circuit, the bidirectional switch circuit includes a first path and a second path that are coupled in parallel between the V2X signal end and a third combination point, and the first path includes a first power amplifier. A fifth branch includes a second control signal end coupled to the bidirectional switch circuit, and the second control signal end receives the control signal to control a gain of the first power amplifier.

FIG. 20A

**(Cont. next page)**

EP 4 708 710 A1

Control signal

Radio frequency signal

Power supply current

Relay

Second power supply circuit 66 — 6

uart1+tx-en+clk

First enhancement circuit 90

uart1+tx-en

Q4

C6

Second low-pass filter

P2

First low-pass filter

tx-en

Second controller 65 — 5

52

72

71

TX-EN2

UAR2

GND

P3

C8    C7

Power detector diode — 99

uart2

22

X

CONT. FROM FIG. 20A

Connector 80

Q3

Bandpass filter

C5

PA1

V2X 5.9 GHz — 4

12

42

PA2

Bidirectional switch circuit 13

FIG. 20B

2

## Description

This application claims priority to Chinese Patent Application No. 202310704285.6, filed with the China National Intellectual Property Administration on June 13, 2023 and entitled "T-BOX, RELAY, SIGNAL TRANSMISSION SYSTEM, AND VEHICLE", which is incorporated herein by reference in its entirety.

## TECHNICAL FIELD

This application relates to the field of communication technologies, and in particular, to a T-Box, a relay, a signal transmission system, and a vehicle.

## BACKGROUND

A vehicle to everything (vehicle to everything, V2X) system is a next-generation information communication technology that connects a vehicle to everything. The vehicle uses a telematics communication terminal (telematics Box, T-Box) that supports a V2X technology as a transmit/receive apparatus for V2X information, and can form the V2X system with other things based on a mature communication network architecture, to implement V2X communication.

Because a distance between an external antenna of the vehicle and the T-Box is long, and a radio frequency signal suffers from more severe attenuation at a higher frequency, excessive attenuation causes a serious decline in radio frequency performance of the entire vehicle. To alleviate the attenuation, a person skilled in the art proposes to use a relay to alleviate the attenuation. The relay amplifies and forwards a signal, to improve a radio frequency signal transmission capability.

However, in the current technology, the T-Box cannot send a control signal to the relay. As a result, the relay does not have a dynamic adjustment capability, for example, does not have a capability of dynamically adjusting a gain. Consequently, a signal transmission system including the T-Box and the relay cannot dynamically match different vehicle models.

## SUMMARY

Embodiments of this application provide a T-Box, a relay, a signal transmission system, and a vehicle, so that the T-Box can synchronously send a radio frequency signal and a control signal to the relay through a cable.

To achieve the foregoing objective, this application uses the following technical solutions.

According to a first aspect of embodiments of this application, a T-Box is provided. The T-Box includes a first branch and a second branch. The first branch includes a vehicle to everything V2X circuit and a first radio frequency transmission circuit. The first radio frequency transmission circuit is coupled between the V2X circuit and a first combination point. The V2X circuit is configured to transmit a radio frequency signal when the T-Box is configured to transmit a signal, and receive a radio frequency signal when the T-Box is configured to receive a signal. The second branch includes a first control signal end and a first radio frequency isolation circuit. The first radio frequency isolation circuit is coupled between the first control signal end and the first combination point. The first control signal end is configured to output a control signal. The first radio frequency transmission circuit is configured to transmit the radio frequency signal and isolate the control signal. The first radio frequency isolation circuit is configured to transmit the control signal and isolate the radio frequency signal.

In the T-Box provided in this embodiment of this application, the radio frequency signal transmitted by the first branch is used for V2X communication, and the control signal transmitted by the second branch is used to control the relay. The control signal may carry any information related to control of the relay. In this embodiment of this application, the control signal and the radio frequency signal are aggregated by using a circuit structure, so that the T-Box can synchronously output the control signal when outputting the radio frequency signal. The control signal may be used to control the relay to adjust a parameter such as a gain. When the T-Box is used in the signal transmission system, the T-Box may synchronously transmit the radio frequency signal and the control signal to the relay through a cable. This does not excessively increase complexity of the signal transmission system, but enables the relay to dynamically adjust a parameter of the relay based on the control signal, to match different vehicle models. In addition, simulation shows that when the control signal is synchronously transmitted, a loss of the radio frequency signal transmitted by the V2X circuit is low, and radio frequency performance of the T-Box is hardly affected. In addition, in this embodiment of this application, the control signal and the radio frequency signal are aggregated by using the T-Box, and the control signal and the radio frequency signal are synchronously transmitted through one cable by using a hardware circuit solution. No large-sized component needs to be additionally added, costs are reduced, a miniaturization requirement is met, and the T-Box can be used in the vehicle. For example, the control signal may carry information related to adjustment of a gain of the relay, to adjust the gain of the relay based on different application scenarios, to adapt to attenuation of different cables, so that one signal transmission system can adapt to a plurality of vehicle models. For another example, the control signal may carry information related to notifying the relay of signal transmitting and receiving, to adjust transmitting and receiving of the relay based on different application states.

In a possible implementation, the first radio frequency isolation circuit includes a $(1/4+N/2) \lambda$ transmission line. A first end of the $(1/4+N/2) \lambda$ transmission line is coupled to the first combination point, and a second end of the (1/4+N/2) λ transmission line is coupled to the first node. The first node is coupled to the first control signal end. λ is a wavelength of the radio frequency signal, and N is an integer greater than or equal to 0. A plurality of radio frequency signals are isolated by using the transmission line, so that a structure is simple and an occupied area is small.

In a possible implementation, the T-Box further includes a circuit board, and the (1/4+N/2) λ transmission line is integrated inside the circuit board. In this way, an area occupied by the T-Box is small, and costs are low.

In a possible implementation, the first radio frequency isolation circuit further includes a first capacitor and a second capacitor. A first end of the first capacitor and a first end of the second capacitor are both coupled to a reference ground voltage end, and a second end of the first capacitor and a second end of the second capacitor are both coupled to the first node. The first capacitor and the second capacitor are disposed, to compensate for a frequency band deviation caused by a processing error of the (1/4+N/2) λ transmission line, and optimize isolation effect on the radio frequency signal.

In a possible implementation, the first radio frequency isolation circuit includes an isolator. In this way, the first radio frequency isolation circuit is a finished component, and may be directly coupled to the T-Box. A design is simple.

In a possible implementation, the T-Box further includes a third branch. The third branch includes a first power supply circuit. The first power supply circuit is coupled to a second combination point. The second combination point is located between the first radio frequency isolation circuit and the first control signal end. In this case, signals aggregated at the first combination point include the radio frequency signal, the control signal, and a power supply current, and the radio frequency signal, the control signal, and the power supply current are synchronously transmitted through one cable by using a hardware circuit solution. No large-sized component needs to be additionally introduced. This has a great market prospect.

In a possible implementation, the first branch further includes a first direct current block and alternating current pass circuit, and the first direct current block and alternating current pass circuit and the first radio frequency transmission circuit are coupled in series between the V2X circuit and the first combination point.

The first direct current block and alternating current pass circuit is disposed in the first branch, so that the radio frequency signal can pass through the first direct current block and alternating current pass circuit, but the power supply current at the first combination point cannot be transmitted to the V2X circuit through the first direct current block and alternating current pass circuit. This can reduce a loss of the power supply current, and weaken interference generated on the radio frequency signal transmitted in the first branch.

In a possible implementation, the first direct current block and alternating current pass circuit includes a first direct current block capacitor. In this way, a structure of the first direct current block and alternating current pass circuit is simple, and an area occupied by the T-Box is small.

In a possible implementation, the second branch further includes a second direct current block and alternating current pass circuit, and the second direct current block and alternating current pass circuit is coupled between the first control signal end and the second combination point.

The second direct current block and alternating current pass circuit is disposed in the second branch to prevent the power supply current from being transmitted in the second branch. In other words, the power supply current is not transmitted to the first control signal end. This can reduce a loss of the power supply current, and weaken interference generated on the control signal transmitted in the second branch.

In a possible implementation, the second direct current block and alternating current pass circuit includes a second direct current block capacitor. In this way, a structure of the second direct current block and alternating current pass circuit is simple, and an area occupied by the T-Box is small.

In a possible implementation, the third branch further includes a first direct current pass and alternating current block circuit, and the first direct current pass and alternating current block circuit is coupled between the first power supply circuit and the second combination point.

The power supply current output by the first power supply circuit in the third branch is transmitted to the first combination point, but the power supply current is isolated by the first direct current block and alternating current pass circuit, and is not transmitted to the first branch. In addition, the power supply current is isolated by the second direct current block and alternating current pass circuit, and is not transmitted to the second branch. Therefore, there is almost no loss of the power supply current. The first direct current pass and alternating current block circuit may also isolate the control signal in the second branch, to reduce a loss of the control signal.

In a possible implementation, the first direct current pass and alternating current block circuit includes an equivalent inductor. In this way, a structure of the first direct current pass and alternating current block circuit is simple, and the area occupied by the T-Box is small.

In a possible implementation, the first control signal end includes a first gain control signal end and a first transmit/receive control signal end. In this way, the T-Box can synchronously transmit a gain control signal and a transmit/receive control signal to the relay, to optimize performance of the T-Box.

In a possible implementation, the second branch further includes a first controller, and the first controller is configured to output a first gain control signal to the first gain control signal end after receiving a transmit/receive control signal from the first transmit/receive control signal end. The first controller may output the first gain control signal based on the transmit/receive control signal, to control a gain value of the relay.

In a possible implementation, the first controller is coupled to the first gain control signal end and the first transmit/receive control signal end, and the V2X circuit is coupled to the first transmit/receive control signal end. The first controller transmits the first gain control signal, so that the first gain control signal is adjustable to adapt to different application scenarios.

In a possible implementation, the second branch further includes a modulation circuit. An input end of the modulation circuit is coupled to the first gain control signal end and the first transmit/receive control signal end, and an output end of the modulation circuit is coupled to the first radio frequency isolation circuit. In this way, one signal can carry a plurality of pieces of information, the structure of the T-Box is simplified, and performance of the T-Box is optimized.

In a possible implementation, the second branch further includes a carrier circuit, the carrier circuit is configured to output a carrier signal, and the carrier circuit is coupled to the input end of the modulation circuit. The carrier signal is set to carry and transmit the control signal, to assist in transmitting the control signal, thereby improving transmission effect of the control signal.

In a possible implementation, the carrier circuit includes a clock oscillator. A clock signal is used as the carrier signal, so that after receiving the modulation signal, the gain can easily separate the clock signal from the control signal, and data is not easily lost during separation.

In a possible implementation, the modulation circuit includes a first AND gate. An input end of the first AND gate is coupled to the first gain control signal end, the first transmit/receive control signal end, and the carrier circuit, and an output end of the first AND gate is coupled to the first radio frequency isolation circuit. Three signals are modulated in a form of a triple AND gate. A structure is simple, and an occupied area is small.

In a possible implementation, the modulation circuit includes a second AND gate and a third AND gate. An input end of the second AND gate is coupled to two of the first gain control signal end, the first transmit/receive control signal end, and the carrier circuit. An output end of the second AND gate is coupled to an input end of the third AND gate. The input end of the third AND gate is further coupled to a remaining one of the first gain control signal end, the first transmit/receive control signal end, and the carrier circuit. An output end of the third AND gate is coupled to the first radio frequency isolation circuit. The three signals are modulated in a form of a two-stage dual AND gate. A principle is simple.

In a possible implementation, the second branch further includes an operational amplifier. The operational amplifier is coupled between the modulation circuit and the first radio frequency isolation circuit. The operational amplifier is disposed at the output end of the modulation circuit, so that the signal modulated by the modulation circuit can be amplified/attenuated and then transmitted to the first combination point, to meet requirements of different application scenarios.

In a possible implementation, the first radio frequency transmission circuit includes a bandpass filter. This is an implementation with a simple structure, mature technology, and low costs.

According to a second aspect of embodiments of this application, a relay is provided. The relay includes a fourth branch and a fifth branch. The fourth branch includes a vehicle to everything V2X signal end and a bidirectional switch circuit. The bidirectional switch circuit includes a first path and a second path that are coupled in parallel between the V2X signal end and a third combination point. The first path includes a first power amplifier. An output end of the first power amplifier is coupled to the V2X signal end. The V2X signal end is configured to transmit a radio frequency signal when the relay is configured to transmit a signal, and receive a radio frequency signal when the relay is configured to receive a signal. The fifth branch includes a second control signal end and a second radio frequency isolation circuit. The second control signal end is coupled to the bidirectional switch circuit. The second radio frequency isolation circuit is coupled between the second control signal end and the third combination point. The second control signal end is configured to receive a control signal. The second radio frequency isolation circuit is configured to transmit the control signal and isolate the radio frequency signal.

After receiving the control signal sent by the T-Box, the relay provided in this embodiment of this application adjusts the relay based on the control signal, so that the relay has a dynamic adjustment function, to meet requirements in different application scenarios. When the control signal includes a first gain control signal, the relay may adjust a gain value of the relay based on the first gain control signal, to adapt to cable losses in different vehicles. In this way, one signal transmission system can adapt to different types of vehicles, so that adaptability is extremely high and costs are low.

In a possible implementation, the second control signal end includes a second gain control signal end and a second transmit/receive control signal end. The second gain control signal end is coupled to the first power amplifier, and the second transmit/receive control signal end is separately coupled to the first path and the second path. In this way, signals that can be identified by the relay include the gain control signal and the transmit/receive control signal, and the relay is controlled by these signals, to optimize performance of the relay.

In a possible implementation, the fifth branch further includes a second controller and a first frequency band block circuit. The first frequency band block circuit is coupled between the second transmit/receive control signal end and a second node, and the second node is coupled to the second radio frequency isolation circuit. The second controller is configured to output a second gain control signal to the second gain control signal end after receiving a transmit/receive control signal from the second transmit/receive control signal end and the control signal from the second node. The second controller generates the second gain control signal based on the control signal that is sent by the T-Box and that includes the first gain control signal and the separated transmit/receive control signal, and transmits the second gain control signal to the first power amplifier, to control a gain of the first power amplifier.

In a possible implementation, an output end of the second controller is coupled to the second gain control signal end, and an input end of the second controller is coupled to the second transmit/receive control signal end and the second node. In this manner, the modulation signal output by the T-Box is separated, a structure is simple, and a signal loss is small.

In a possible implementation, the fifth branch further includes a second frequency band block circuit. The second frequency band block circuit is coupled between the second node and the second radio frequency isolation circuit. When the modulation signal includes a carrier signal, the relay may first block the carrier signal. In this way, a manner of separating the modulation signal can be simplified.

In a possible implementation, the fifth branch further includes a first signal enhancement circuit, and the first signal enhancement circuit is coupled between the second controller and the second node. The first signal enhancement circuit is disposed between the second controller and the second node, so that a signal of the second node may be enhanced and then transmitted to the second controller, to improve signal processing accuracy.

In a possible implementation, the fifth branch further includes a second signal enhancement circuit, and the second signal enhancement circuit is coupled between the second controller and the second transmit/receive control signal end. The second signal enhancement circuit is disposed between the second controller and the second transmit/receive control signal end, so that a signal of the second transmit/receive control signal end may be enhanced and then transmitted to the second controller, to improve signal accuracy.

In a possible implementation, the fifth branch further includes a third signal enhancement circuit, and the third signal enhancement circuit is coupled between the second node and the second radio frequency isolation circuit. The second signal enhancement circuit is disposed between the second node and the second radio frequency isolation circuit, so that a signal output by the second radio frequency isolation circuit may be enhanced and then transmitted to the second node, to improve signal accuracy.

In a possible implementation, the relay further includes a power detector, the power detector is separately coupled to the input end of the second controller and the third combination point, and the second controller is further configured to receive, before outputting the second gain control signal to the second gain control signal end, a power signal sent by the power detector. The second controller outputs the second gain control signal based on the first gain control signal (representing power strength of the radio frequency signal output by the T-Box) and the power signal (representing power strength of the radio frequency signal after cable loss) output by the power detector, to perform corresponding gain control on the first power amplifier. A gain value of the second gain control signal output by the second controller varies with a length of a cable, so that the signal transmission system has a function of adapting to different cable lengths, and the signal transmission system provided in this embodiment of this application can be used in a vehicle with cables of various lengths.

In a possible implementation, the second radio frequency isolation circuit includes a $(1/4+N/2) \lambda$ transmission line. A first end of the $(1/4+N/2) \lambda$ transmission line is coupled to the third combination point. A second end of the $(1/4+N/2) \lambda$ transmission line is coupled to the third node. The third node is coupled to the second control signal end. $\lambda$ is a wavelength of the radio frequency signal, and N is an integer greater than or equal to 0. A plurality of radio frequency signals are isolated by using the transmission line, so that a structure is simple and an occupied area is small.

In a possible implementation, the relay further includes a circuit board, and the $(1/4+N/2) \lambda$ transmission line is integrated inside the circuit board. In this way, an area occupied by the relay is small, and costs are low.

In a possible implementation, the second radio frequency isolation circuit further includes a third capacitor and a fourth capacitor. A first end of the third capacitor and a first end of the fourth capacitor are both coupled to a reference ground voltage end, and a second end of the third capacitor and a second end of the fourth capacitor are both coupled to the third node. The third capacitor and the fourth capacitor are disposed, to compensate for a frequency band deviation caused by a processing error of the $(1/4+N/2) \lambda$ transmission line, and optimize isolation effect on the radio frequency signal.

In a possible implementation, the second path includes a second power amplifier. The second power amplifier may amplify a signal transmitted on the second path, to meet different requirements.

In a possible implementation, the relay further includes a sixth branch. The sixth branch includes a second power supply circuit. The second power supply circuit is coupled to a fourth combination point. The fourth combination point is located between the second radio frequency isolation circuit and the second control signal end. The relay includes the sixth branch, and can receive a power supply current sent by the T-Box, to supply power to the relay. A structure is simple, and costs are low.

In a possible implementation, the fourth branch further includes a second radio frequency transmission circuit, and the second radio frequency transmission circuit is coupled between the bidirectional switch circuit and the third combination point. The second radio frequency transmission circuit in the fourth branch may filter out a signal of another frequency band, and weaken interference of an out-of-band signal through the radio frequency signal.

In a possible implementation, the fourth branch further includes a third direct current block and alternating current pass circuit, and the third direct current block and alternating current pass circuit is coupled between the bidirectional switch circuit and the third combination point. The third direct current block and alternating current pass circuit can reduce a power supply current loss, and weaken interference generated on the radio frequency signal transmitted on the fourth branch.

In a possible implementation, the third direct current block and alternating current pass circuit includes a third direct current block capacitor. In this way, a structure of the third direct current block and alternating current pass circuit is simple, and an area occupied by the relay is small.

In a possible implementation, the fifth branch further includes a fourth direct current block and alternating current pass circuit, and the fourth direct current block and alternating current pass circuit is coupled between the second control signal end and the fourth combination point. The fourth direct current block and alternating current pass circuit can reduce a loss of a power supply current on one hand, and can weaken interference to a control signal transmitted on the fifth branch.

In a possible implementation, the fourth direct current block and alternating current pass circuit includes a fourth direct current block capacitor. In this way, a structure of the fourth direct current block and alternating current pass circuit is simple, and the area occupied by the relay is small.

In a possible implementation, the sixth branch further includes a second direct current pass and alternating current block circuit, and the second direct current pass and alternating current block circuit is coupled between the second power supply circuit and the fourth combination point. The second direct current pass and alternating current block circuit can isolate the control signal in the fifth branch, to reduce a loss of the control signal.

In a possible implementation, the second direct current pass and alternating current block circuit includes an equivalent inductor. In this way, a structure of the second direct current pass and alternating current block circuit is simple, and the area occupied by the relay is small.

According to a third aspect of embodiments of this application, a signal transmission system is provided. The signal transmission system includes the T-Box and the cable in any one of the first aspect, and the relay in any one of the second aspect. One end of the cable is coupled to the first combination point of the T-Box, and the other end of the cable is coupled to the third combination point of the relay. The system provided in embodiments of this application includes the T-Box in the first aspect and the relay in the second aspect. Beneficial effect of the system is the same as beneficial effect of the T-Box and the relay, and details are not described herein again.

According to a fourth aspect of embodiments of this application, a vehicle is provided. The vehicle includes an antenna and the signal transmission system in the third aspect. The signal transmission system is coupled to the antenna.

## BRIEF DESCRIPTION OF DRAWINGS

FIG. 1 is a diagram of an application scenario of V2X according to an embodiment of this application;
FIG. 2 is a framework diagram of a vehicle according to an embodiment of this application;
FIG. 3 to FIG. 6 are framework diagrams of a T-Box according to embodiments of this application;
FIG. 7A is a diagram of an architecture of a transmission line network according to an embodiment of this application;
FIG. 7B is a simulation diagram of isolation effect of a first radio frequency isolation circuit shown in FIG. 6 on a radio frequency signal according to an embodiment of this application;
FIG. 7C is a simulation diagram of isolation effect of another first radio frequency isolation circuit shown in FIG. 6 on a radio frequency signal according to an embodiment of this application;
FIG. 8 to FIG. 12 are framework diagrams of a T-Box according to embodiments of this application;
FIG. 13 is a diagram of a modulation result of a modulation circuit according to an embodiment of this application; and
FIG. 14 to FIG. 20A and FIG. 20B are framework diagrams of a relay according to embodiments of this application.

## DESCRIPTION OF EMBODIMENTS

The following describes the technical solutions in embodiments of this application with reference to the accompanying drawings in embodiments of this application. It is clear that the described embodiments are merely a part rather than all of embodiments of this application.

Terms such as "second" and "first" below are only for ease of description, and cannot be understood as indicating or implying relative importance or implicitly indicating a quantity of indicated technical features. Therefore, a feature limited by "second", "first", or the like may explicitly or implicitly include one or more features. In the descriptions of this application, unless otherwise stated, "a plurality of" means two or more than two.

In addition, in embodiments of this application, orientation terms such as "upper", "lower", "left", and "right" may include but are not limited to definitions based on illustrated orientations in which components in the accompanying drawings are placed. It should be understood that, these directional terms may be relative concepts. They are used for description and clarification of relative positions, and may vary accordingly depending on a change in the orientations in which the components in the accompanying drawings are placed in the accompanying drawings.

In embodiments of this application, unless otherwise clearly specified and limited, the term "connection" should be understood in a broad sense. For example, the "connection" may be a fixed connection, a detachable connection, or an integrated connection, or may be a direct connection or an indirect connection implemented through an intermediate medium. In addition, the term "coupling" may be a direct electrical connection, or may be an indirect electrical connection through an intermediate medium. The term "contact" may be direct contact or indirect contact through an intermediate medium.

In embodiments of this application, "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

First, for ease of understanding, the following first describes related terms and concepts that may be used in embodiments of this application.

(1) Vehicle to everything (vehicle to everything, V2X)

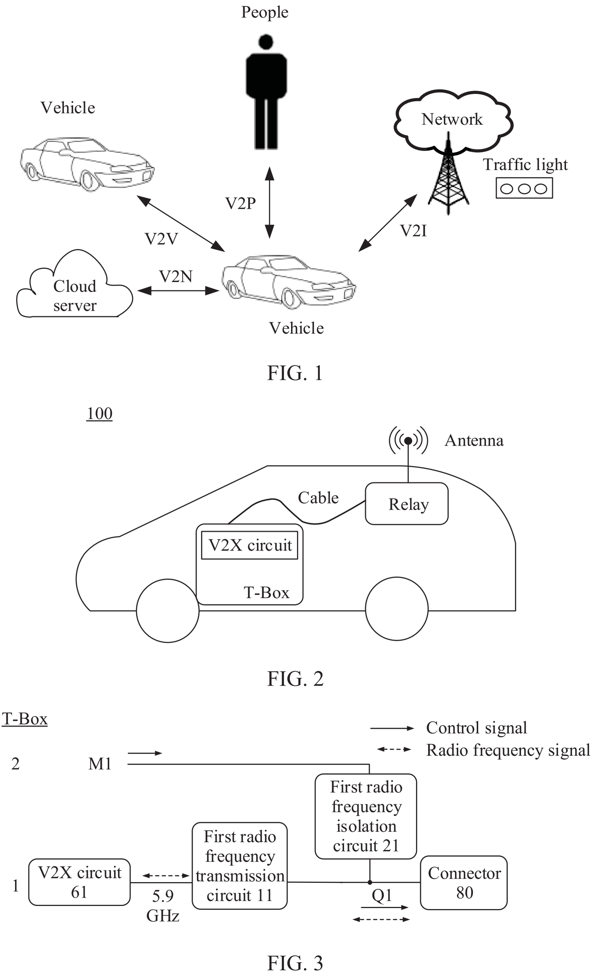

V2X is used to implement information exchange between a vehicle and any entity that may affect the vehicle, to reduce occurrence of accidents, alleviate traffic congestion, reduce environmental pollution, and provide other information services. As shown in FIG. 1, V2X includes four parts. Vehicle to network (Vehicle To Network, V2N) communication is currently the most widely used form of the Internet of vehicles. A main function of vehicle to network communication is to enable a vehicle to connect to a cloud server through a mobile network, and use application functions such as navigation, entertainment, and anti-theft provided by the cloud server. Vehicle to vehicle (vehicle to vehicle, V2V) communication may be used for information exchange and reminding between vehicles. A most typical application is used for an anti-collision safety system between vehicles. Vehicle to infrastructure (vehicle to infrastructure, V2I) communication is communication between a vehicle and a road or even another infrastructure, for example, a traffic light or a roadblock, to obtain road management information such as a traffic light signal time sequence. Vehicle to pedestrian (vehicle to pedestrian, V2P) communication is used to provide a safety warning for a pedestrian or a non-motorized vehicle on a road.

Currently, the V2X technology may be dedicated short range communication (dedicated short range communication, DSRC) related to a vehicle defined in the institute of electrical and electronics engineers (institute of electrical and electronics engineers, IEEE) 802.11p, or may be cellular vehicle to everything (cellular V2X, C-V2X) technology defined by the 3rd generation partnership project (3rd generation partnership project, 3GPP) based on a cellular mobile communication technology. It should be noted that the application scenario of the solution provided in embodiments of this application is not limited to the foregoing two mainstream implementations (DSRC and C-V2X) in the current V2X technology. With evolution of technologies, other new V2X technology implementations are not beyond the application scenario coverage of embodiments of this application.

From a perspective of a network state and a technical advantage of C-V2X evolution, C-V2X should be a preferred choice of a V2X technology standard in China. C-V2X may be further classified into two communication manners: a direct manner (V2X-direct) and a cellular manner (V2X-cellular) based on different interfaces. V2X-direct is based on a D2D (device-to-device, device-to-device) proximity communication service (ProSe) in the LTE standard, and uses a dedicated frequency band (defined as B47 5.9 GHz in the protocol) of the Internet of Vehicles through a PC5 interface, to implement direct communication between vehicles, between vehicles and roadside units, and between vehicles and pedestrians. V2X-direct features low latency and high mobility, but requires good resource configuration and congestion control algorithms. In an environment without LTE network coverage, neighboring devices may perform direct communication. V2X-cellular uses LTE broadcast, forwards the LTE broadcast through a Uu interface of a cellular network, and uses a cellular network frequency band (B3, B7, B8, B39, and B41 specified in a protocol).

Based on the V2X technology, a vehicle shares information through a channel, to expand a sensing range, so as to detect a hidden threat, and ensure that important warning information is pushed in a timely and correct manner at a critical moment. The V2X technology can not only help improve vehicle safety performance and improve road traffic efficiency, but also promote development of an autonomous driving technology.

(2) Telematics communication terminal (telematics box, T-Box)

The vehicle-mounted T-Box is a communication component (or described as an apparatus) in a vehicle-mounted information system. The vehicle-mounted T-Box is mainly configured to communicate with another apparatus and/or another electronic device in the vehicle, to display vehicle information by using an electronic device and control the vehicle. The component is front-mounted in the vehicle, accesses a mobile operator network through a built-in communication module, connects to a vehicle body network through an automotive bus, connects to a head unit through data channels such as an Ethernet/wireless fidelity (wireless fidelity, Wi-Fi) /universal serial bus (universal serial bus, USB) interface, and shares mobile data with a driver and a passenger in the vehicle through Wi-Fi of the head unit.

FIG. 2 is a framework diagram of a vehicle according to an embodiment of this application.

As shown in FIG. 2, this embodiment of this application provides a vehicle 100. The vehicle includes a T-Box, a cable, a relay, and an antenna.

The T-Box is coupled to the antenna through the cable, and a V2X circuit in the T-Box transmits a radio frequency signal. The radio frequency signal is transmitted between the T-Box and the antenna. Because the T-Box is usually front-mounted in the vehicle 100, and the antenna is usually rear-mounted in the vehicle 100, a distance between the T-Box and the antenna is usually long. In addition, the radio frequency signal suffers from more severe attenuation at a higher frequency, and excessive attenuation causes a serious decline in radio frequency performance of the entire vehicle.

Based on this, as shown in FIG. 2, the relay is added to the vehicle 100. The relay is located between the T-Box and the antenna. The relay amplifies and forwards the radio frequency signal, and increases a transmission capability of the radio frequency signal, to mitigate attenuation of the radio frequency signal.

The T-Box, the cable, and the relay form a signal transmission system. The signal transmission system is coupled to the antenna, so that the vehicle 100 implements a V2X function.

However, because one T-Box needs to adapt to a plurality of vehicle models, and an antenna and a relay position vary for each vehicle model, a gain of the relay for the radio frequency signal need to vary.

To resolve the foregoing problem, a person skilled in the art designs relays with different gain values to adapt to cables of different lengths, and gain values of the relay are fixed to adapt to different cable attenuation.

A gain value of the relay is fixed, and relays with different configuration are used for different vehicle models. Although this can meet a requirement, an adaptation solution is complex, and software needs to be separately developed for each vehicle model, resulting in increased costs.

In view of this, an embodiment of this application provides a signal transmission system. The signal transmission system includes a T-Box, a cable, and a relay. One end of the cable is coupled to the T-Box, and the other end of the cable is coupled to the relay. Structures of the T-Box and the relay are changed, so that a signal transmitted in the cable includes a gain control signal. In this case, the relay is a gain-adjustable relay, so that a same signal transmission system adapts to different vehicles 100.

The following first describes the T-Box and the relay in the signal transmission system respectively, and then schematically describes the signal transmission system.

Example 1

FIG. 3 is a framework diagram of a T-Box according to an embodiment of this application.

This embodiment of this application provides a T-Box. As shown in FIG. 3, the T-Box includes a first branch 1 and a second branch 2.

The first branch 1 includes a V2X circuit 61 and a first radio frequency transmission circuit 11, and the first radio frequency transmission circuit 11 is coupled between the V2X circuit 61 and a first combination point Q1.

The V2X circuit 61 is configured to transmit and receive a radio frequency signal. The V2X circuit 61 may be configured to receive a radio frequency signal, and the V2X circuit 61 may be configured to transmit a radio frequency signal. The radio frequency signal is, for example, a 5.9 GHz signal. Certainly, the radio frequency signal may be a signal of any frequency band transmitted by the V2X circuit 61, and 5.9 GHz is merely an example.

When the T-Box sends a signal, the V2X circuit 61 is configured to output the radio frequency signal, and the radio frequency signal output by the V2X circuit 61 is transmitted to the first combination point Q1 through the first radio frequency transmission circuit 11. When the T-Box receives a signal, the V2X circuit 61 is configured to receive the radio frequency signal, and the first combination point Q1 transmits the radio frequency signal to the V2X circuit 61 through the first radio frequency transmission circuit 11.

It may also be understood that the radio frequency signal is transmitted in the first branch 1, the radio frequency signal may be transmitted from the V2X circuit 61 to the first combination point Q1, and the radio frequency signal may also be transmitted from the first combination point Q1 to the V2X circuit 61.

A structure of the V2X circuit 61 is not limited in this embodiment of this application. All V2X circuits (also referred to as V2X modules) in a related technology are applicable to this embodiment of this application.

The second branch 2 includes a first control signal end M1 and a first radio frequency isolation circuit 21. The first radio frequency isolation circuit 21 is coupled between the first control signal end M1 and the first combination point Q1.

The first control signal end M1 is configured to output a control signal. The control signal includes, for example, a first gain control signal and a transmit/receive control signal. When distances between the T-Box and the antenna are different, the control signal may control a gain of the relay, to adjust the gain of the relay based on a specific scenario.

It may also be understood that the control signal is transmitted in the second branch 2, and the control signal may be transmitted from the first control signal end M1 to the first combination point Q1.

The radio frequency signal and the control signal are combined at the first combination point Q1 and then output to the cable. Therefore, a signal transmitted in the cable includes at least the radio frequency signal and the control signal.

In this case, when the T-Box is configured to transmit a signal, the radio frequency signal transmitted by the first branch 1 and the control signal transmitted by the second branch 2 are combined at the first combination point Q1 and then output. When the T-Box is configured to receive a signal, the first combination point Q1 receives the radio frequency signal, and then branches the radio frequency signal into the first branch 1.

In some embodiments, frequencies of the radio frequency signal and the control signal are different.

For example, the radio frequency signal is a high frequency signal, and the control signal is a low frequency signal.

In some embodiments, to prevent interference between signals on the first branch 1 and the second branch 2, the first radio frequency transmission circuit 11 in the first branch 1 is configured to transmit the radio frequency signal and isolate the control signal. The first radio frequency isolation circuit 21 in the second branch 2 is configured to transmit the control signal and isolate the radio frequency signal.

In other words, based on the T-Box shown in FIG. 3, when the T-Box is configured to transmit a signal, the radio frequency signal output by the V2X circuit 61 in the first branch 1 is transmitted to the first combination point Q1 through the first radio frequency transmission circuit 11, but the radio frequency signal is isolated by the first radio frequency isolation circuit 21, and is hardly transmitted to the first control signal end M1. Therefore, there is almost no loss of the radio frequency signal.

In the second branch 2, the control signal output by the first control signal end M1 is transmitted to the first combination point Q1 through the first radio frequency isolation circuit 21, but the control signal is isolated by the first radio frequency transmission circuit 11, and is hardly transmitted to the V2X circuit 61. Therefore, there is almost no loss of the control signal.

When the T-Box is configured to receive a signal,

the signal received by the first combination point Q1 includes the radio frequency signal.

The radio frequency signal in the first combination point Q1 is isolated by the first radio frequency isolation circuit 21, and is hardly transmitted to the first control signal end M1. However, the radio frequency signal may be transmitted to the V2X circuit 61 through the first radio frequency transmission circuit 11, to branch the radio frequency signal into the first branch 1.

The control signal at the first combination point Q1 is isolated by the first radio frequency transmission circuit 11, and is not transmitted to the V2X signal end. However, the control signal may be transmitted to the first control signal end M1 through the first radio frequency isolation circuit 21, to branch the control signal in an aggregated signal into the second branch 2.

In this embodiment of this application, for example, the first combination point Q1 may be coupled to a signal output end of the T-Box, or the first combination point Q1 is used as the signal output end of the T-Box.

In some embodiments, as shown in FIG. 3, the T-Box further includes a connector 80. The T-Box is coupled to a cable through the connector 80, and the first combination point Q1 is coupled to the connector 80.

In the T-Box provided in this embodiment of this application, the radio frequency signal transmitted by the first branch 1 is used for V2X communication, and the control signal transmitted by the second branch 2 is used to control the relay. The control signal may carry any information related to control of the relay. In this embodiment of this application, the control signal and the radio frequency signal are aggregated, so that the T-Box can synchronously output the control signal when outputting the radio frequency signal. The control signal may be used to control the relay to adjust a parameter such as a gain. When the T-Box is used in the signal transmission system, the T-Box may synchronously transmit the radio frequency signal and the control signal to the relay through a cable. This does not excessively increase complexity of the signal transmission system, but enables the relay to dynamically adjust a parameter of the relay based on the control signal, to match different vehicle models. In addition, simulation shows that when the control signal is synchronously transmitted, a loss of the radio frequency signal transmitted by the V2X circuit 61 is low, and radio frequency performance is hardly affected. In addition, in this embodiment of this application, the control signal and the radio frequency signal are aggregated by using the T-Box, and the control signal and the radio frequency signal are synchronously transmitted through one cable by using a hardware circuit solution. No large-sized component needs to be additionally added, costs are reduced, a miniaturization requirement is met, and the T-Box can be used in the vehicle. For example, the control signal may carry information related to adjustment of a gain of the relay, to adjust the gain of the relay based on different application scenarios, to adapt to attenuation of different cables, so that one signal transmission system can adapt to a plurality of vehicle models. For another example, the control signal may carry information related to notifying the relay of signal transmitting and receiving, to adjust transmitting and receiving of the relay based on different application states.

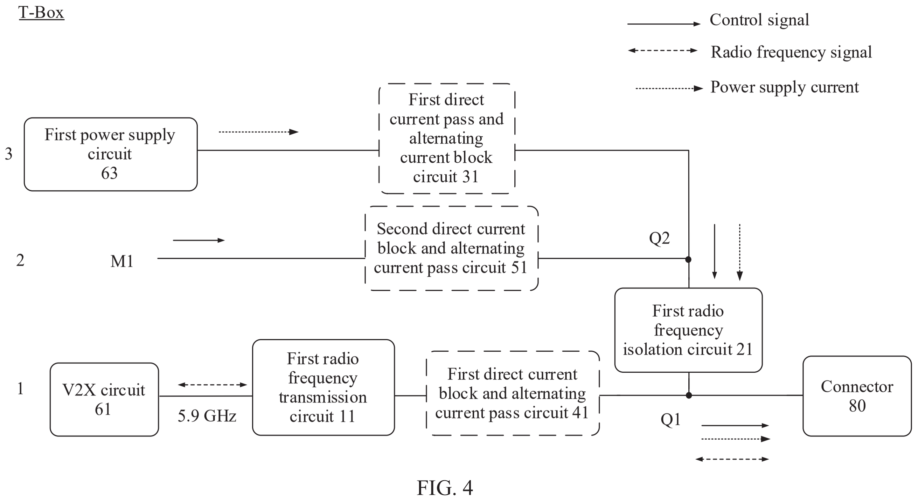

FIG. 4 is a framework diagram of a T-Box according to an embodiment of this application.

In some embodiments, as shown in FIG. 4, the T-Box further includes a third branch 3.

The third branch 3 includes a first power supply circuit 63. The first power supply circuit 63 is coupled to a second combination point Q2. The second combination point Q2 is located between the first radio frequency isolation circuit 21 and the first control signal end M1.

The first power supply circuit 63 is configured to transmit a direct current power supply. The first power supply circuit 63 may supply power to the T-Box. The first power supply circuit 63 may further transmit the direct current power supply to the relay through a cable to supply power to the relay.

It may also be understood that a power supply current is transmitted in the third branch 3, and the power supply current is transmitted from the first power supply circuit 63 to the second combination point Q2 and then transmitted to the first combination point Q1.

In this case, signals aggregated at the first combination point Q1 include the radio frequency signal, the control signal, and the power supply current, and the radio frequency signal, the control signal, and the power supply current are synchronously transmitted through one cable by using a hardware circuit solution. No large-sized component needs to be additionally introduced. This has a great market prospect.

For example, the first power supply circuit 63 is configured to provide a 1 A direct current. A structure of the first power supply circuit 63 is not limited in this embodiment of this application. Circuits configured to provide a direct current in a related technology are all applicable to this embodiment of this application.

In some embodiments, still refer to FIG. 4. The third branch 3 further includes a first direct current pass and alternating current block circuit 31. The first direct current pass and alternating current block circuit 31 is coupled between the first power supply circuit 63 and the second combination point Q2.

Because both the radio frequency signal and the control signal are alternating current signals, the first direct current pass and alternating current block circuit 31 is disposed in the third branch 3, so that the direct current power supply output by the first power supply circuit 63 can be transmitted to the second combination point Q2 through the first direct current pass and alternating current block circuit 31, and then transmitted to the first combination point Q1. However, the radio frequency signal transmitted by the first branch 1 and the control signal transmitted by the second branch 2 cannot be transmitted to the first power supply circuit 63 through the first direct current pass and alternating current block circuit 31.

In this way, losses of the radio frequency signal and the control signal can be reduced.

In some embodiments, still refer to FIG. 4. The first branch 1 further includes a first direct current block and alternating current pass circuit 41, and the first direct current block and alternating current pass circuit 41 and the first radio frequency transmission circuit 11 are coupled in series between the V2X circuit 61 and the first combination point Q1.

In FIG. 4, an example in which the first radio frequency transmission circuit 11 is coupled close to the V2X circuit 61 and the first direct current block and alternating current pass circuit 41 is coupled close to the first combination point Q1 is used for illustration. Alternatively, the first radio frequency transmission circuit 11 may be coupled close to the first combination point Q1, and the first direct current block and alternating current pass circuit 41 may be coupled close to the V2X circuit 61.

The first direct current block and alternating current pass circuit 41 is disposed in the first branch 1, so that the radio frequency signal can pass through the first direct current block and alternating current pass circuit 41, but the power supply current at the first combination point Q1 (for example, the power supply current transmitted by the first power supply circuit 63 to the first combination point Q1) cannot be transmitted to the V2X circuit 61 through the first direct current block and alternating current pass circuit 41. This can reduce a loss of the power supply current, and weaken interference generated on the radio frequency signal transmitted in the first branch 1.

In some embodiments, still refer to FIG. 4. The second branch 2 further includes a second direct current block and alternating current pass circuit 51, and the second direct current block and alternating current pass circuit 51 is coupled between the first control signal end M1 and the second combination point Q2.

In other words, the second direct current block and alternating current pass circuit 51 is coupled to one end that is of the first radio frequency isolation circuit 21 and that is away from the first combination point Q1.

Three types of signals, namely, the radio frequency signal, the control signal, and the power supply current, are aggregated at the first combination point Q1, and the radio frequency signal may be transmitted in the first branch 1. However, to reduce a loss of the radio frequency signal, the radio frequency signal is not expected to be transmitted in the second branch 2 and the third branch 3. The first radio frequency isolation circuit 21 is coupled between the first combination point Q1 and the second combination point Q2. The radio frequency signal at the first combination point Q1 cannot be transmitted to the second combination point Q2, but the power supply current is transmitted to the second combination point Q2. Therefore, the second direct current block and alternating current pass circuit 51 may be disposed in the second branch 2 to prevent the power supply current from being transmitted in the second branch 2. In other words, the power supply current is not transmitted to the first control signal end M1. This can reduce a loss of the power supply current, and weaken interference generated on the control signal transmitted in the second branch 2.

Based on the circuit structure shown in FIG. 4, when the T-Box is configured to transmit a signal,

in the first branch 1, the radio frequency signal output by the V2X circuit 61 is transmitted to the first combination point Q1, but the radio frequency signal is isolated by the first radio frequency isolation circuit 21, and is not transmitted to the second branch 2 and the third branch 3. Therefore, there is almost no loss of the radio frequency signal.

In the second branch 2, the control signal output by the first control signal end M1 is transmitted to the first combination point Q1. However, the control signal is isolated by the first radio frequency transmission circuit 11, and is not transmitted to the first branch 1. In addition, the control signal is isolated by the first direct current pass and alternating current block circuit 31, and is not transmitted to the third branch 3. Therefore, there is almost no loss of the control signal.

In the third branch 3, the power supply current output by the first power supply circuit 63 is transmitted to the first combination point Q1. However, the power supply current is isolated by the first direct current block and alternating current pass circuit 41, and is not transmitted to the first branch 1. In addition, the power supply current is isolated by the second direct current block and alternating current pass circuit 51, and is not transmitted to the second branch 2. Therefore, there is almost no loss of the power supply current.

When the T-Box is configured to receive a signal,

an aggregated signal received by the first combination point Q1 includes the radio frequency signal.

The radio frequency signal in the first combination point Q1 is isolated by the first radio frequency isolation circuit 21, and is not transmitted to the second branch 2 and the third branch 3. However, the radio frequency signal may be transmitted to the V2X circuit 61 through the first radio frequency transmission circuit 11, so that the radio frequency signal can be transmitted in the first branch 1.

It should be noted herein that the first direct current pass and alternating current block circuit 31, the first direct current block and alternating current pass circuit 41, and the second direct current block and alternating current pass circuit 51 in the T-Box shown in FIG. 4 are presented by using dashed lines, to indicate that the T-Box provided in this embodiment of this application may not include the foregoing three circuit modules, or may include only one or two of the foregoing three circuit modules. It is not limited that the T-Box needs to include all of the foregoing three circuit modules.

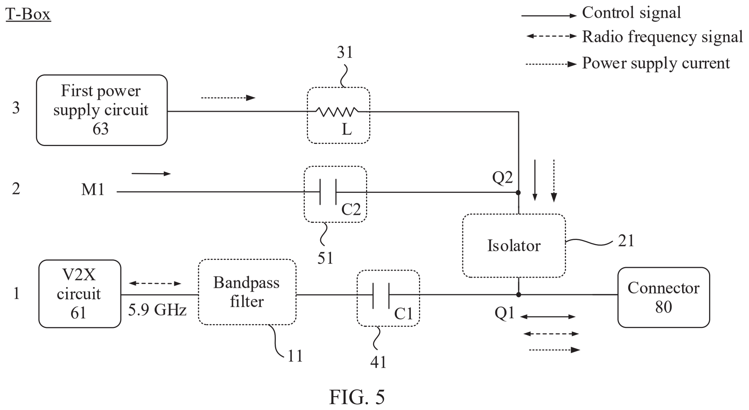

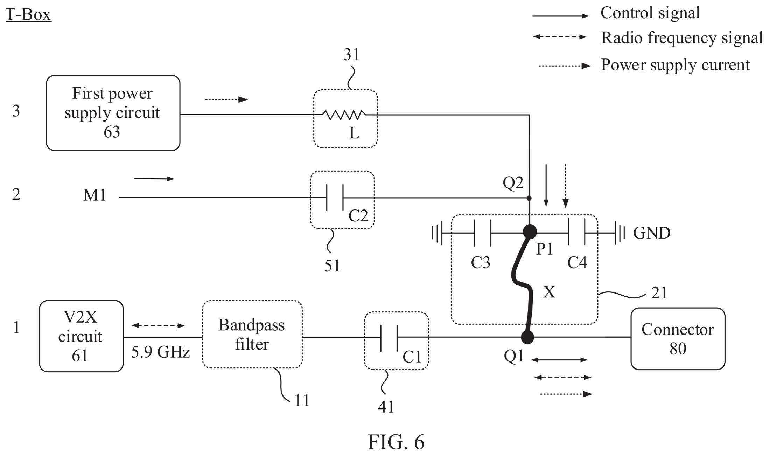

FIG. 5 and FIG. 6 are diagrams of a topology of a T-Box according to embodiments of this application.

Based on the foregoing architecture of the T-Box, as shown in FIG. 5, in some embodiments, the first radio frequency transmission circuit 11 includes a bandpass filter.

The bandpass filter may transmit a high frequency radio frequency signal of 5.9 GHz, and cannot transmit a low frequency signal (a control signal). A structure of the bandpass filter is simple.

In some embodiments, the first direct current pass and alternating current block circuit 31 includes an equivalent inductor L.

In some embodiments, the first direct current block and alternating current pass circuit 41 includes a first direct current block capacitor C1.

For example, a capacitance value of the first direct current block capacitor C1 is at an nfa level.

In some embodiments, the second direct current block and alternating current pass circuit 51 includes a second direct current block capacitor C2.

For example, a capacitance value of the second direct current block capacitor C2 is at an nfa level.

In this way, a structure of the T-Box is simple, and costs are low.

In some embodiments, as shown in FIG. 5, the first radio frequency isolation circuit 21 is an isolator.

For example, a frequency of the radio frequency signal is 5.9 GHz, and the first radio frequency isolation circuit 21 is a 5.9 GHz isolator.

In this way, the first radio frequency isolation circuit 21 is a finished component, and may be directly coupled to the T-Box. A design is simple.

In some other embodiments, as shown in FIG. 6, the first radio frequency isolation circuit 21 includes a $(1/4+N/2) \lambda$ transmission line X, a first end of the $(1/4+N/2) \lambda$ transmission line X is coupled to the first combination point Q1, a second end of the $(1/4+N/2) \lambda$ transmission line X is coupled to a first node P1, and the first node P1 is coupled to the second combination point Q2.

$\lambda$ is a wavelength of the radio frequency signal, and N is an integer greater than or equal to 0.

For example, when N=0, a transmission line included in the first radio frequency isolation circuit 21 is a $1/4\lambda$ transmission line. Alternatively, for example, when N=1, the transmission line included in the first radio frequency isolation circuit 21 is a $3/4\lambda$ transmission line. Alternatively, for example, when N=2, the transmission line included in the first radio frequency isolation circuit 21 is a $(1/4+1) \lambda$ transmission line. Alternatively, for example, when N=3, the transmission line included in the first radio frequency isolation circuit 21 is a $(3/4+1) \lambda$ transmission line or the like.

A plurality of radio frequency signals are isolated by using the transmission line, so that a structure is simple and an occupied area is small.

In some embodiments, the T-Box further includes a circuit board, and the circuit board may be, for example, a printed circuit board (printed circuit board, PCB).

In some embodiments, the first branch 1, the second branch 2, and the third branch 3 are disposed on the circuit board.

In some other embodiments, in the first branch 1, the second branch 2, and the third branch 3, except the (1/4+N/2) λ transmission line X, other components are disposed on the circuit board, and the (1/4+N/2) λ transmission line X is integrated inside the circuit board.

In this way, an area occupied by the T-Box is small, and costs are low.

Still refer to FIG. 6. In some embodiments, the first radio frequency isolation circuit 21 further includes a first capacitor C3 and a second capacitor C4.

A first end of the first capacitor C3 and a first end of the second capacitor C4 are both coupled to the reference ground voltage end GND, and a second end of the first capacitor C3 and a second end of the second capacitor C4 are both coupled to a second end of the (1/4+N/2) λ transmission line X.

For example, the second end of the first capacitor C3 is coupled to the first node P1, and the second end of the second capacitor C4 is coupled to the first node P1.

The first capacitor C3 and the second capacitor C4 are disposed, to compensate for a frequency band deviation caused by a processing error of the (1/4+N/2) λ transmission line X, and optimize isolation effect on the radio frequency signal.

In some embodiments, capacitance values of the first capacitor C3 and the second capacitor C4 are at a pF level.

The capacitance values of the first capacitor C3 and the second capacitor C4 are set to the pF level, to achieve good isolation effect on the radio frequency signal.

In some embodiments, the capacitance values of the first capacitor C3 and the second capacitor C4 are equal.

The capacitance values of the first capacitor C3 and the second capacitor C4 are equal, so that the first node P1 can be used as an endpoint of the first radio frequency isolation circuit 21, and compensation accuracy of the processing error of the (1/4+N/2) λ transmission line X is improved.

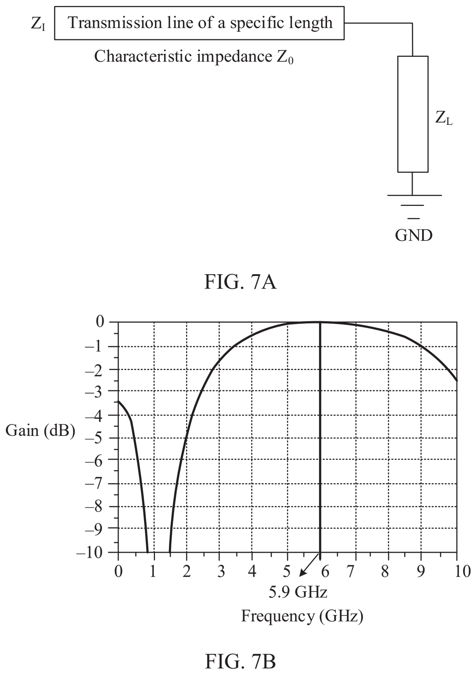

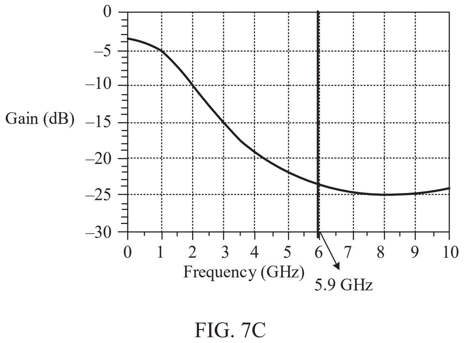

FIG. 7A is a diagram of an architecture of a transmission line network according to an embodiment of this application. FIG. 7B is a simulation diagram of isolation effect of a first radio frequency isolation circuit 21 shown in FIG. 6 on a radio frequency signal according to an embodiment of this application. FIG. 7C is a simulation diagram of isolation effect of a first radio frequency isolation circuit 21 shown in FIG. 6 on a radio frequency signal according to an embodiment of this application.

As shown in FIG. 7A, in a transmission line theory, a transmission line whose characteristic impedance is $Z_0$ has a terminal connected to a load whose impedance is $Z_L$, and the transmission line and the load form a network.

For example, characteristic impedance of the (1/4+N/2) λ transmission line X is $Z_0$, impedance of the first capacitor C3 and the second capacitor C4 is $Z_L$, and the first radio frequency isolation circuit 21 is considered as a network.

Input impedance $Z_I$ of the network is no longer $Z_0$. The input impedance $Z_I$ changes to:

$$Z_I = Z_0 * \frac{Z_L + JZ_0 * \tan\beta l}{Z_0 + JZ_L * \tan\beta l}.$$

$\beta = 2\pi / \lambda$, λ is a wavelength of a signal propagated in the network, and J is an imaginary unit. When $l = \lambda/4$, formula derivation is as follows:

$$Z_I = \frac{Z_0^{\,2}}{Z_L}.$$

If the T-Box is open-circuited, $Z_I = 0$. If the T-Box is short-circuited, $Z_I = \infty$. Therefore, when the (1/4+N/2) λ transmission line X is used to connect a main channel (the first branch 1) and branches (the second branch 2 and the third branch 3), the radio frequency signal on the main channel is hardly attenuated.

As shown in FIG. 7B, simulation shows that, for example, when the T-Box sends a signal, the radio frequency signal is detected between the first combination point Q1 and the connector 80, and attenuation of the radio frequency signal is about -0.025. The attenuation includes attenuation of the radio frequency signal caused by a component and a signal cable between the V2X circuit and a sampling point, and attenuation of the radio frequency signal caused by the first radio frequency isolation circuit 21. Therefore, the attenuation of the first radio frequency isolation circuit 21 on the radio frequency signal of 5.9 GHz is small. As shown in FIG. 7C, when the radio frequency signal is detected between the first node P1 and the second combination point Q2, the attenuation of the radio frequency signal is about -24. Therefore, the radio frequency signal is hardly transmitted to the second combination point Q2 through the first radio frequency isolation circuit 21.

Therefore, the first radio frequency isolation circuit 21 based on the (1/4+N/2) λ transmission line X isolates the radio frequency signal while transmitting the control signal, does not affect normal transmission of the radio frequency signal, and has small attenuation on the radio frequency signal. The attenuation is almost negligible.

The following describes a control signal transmitted in the second branch 2.

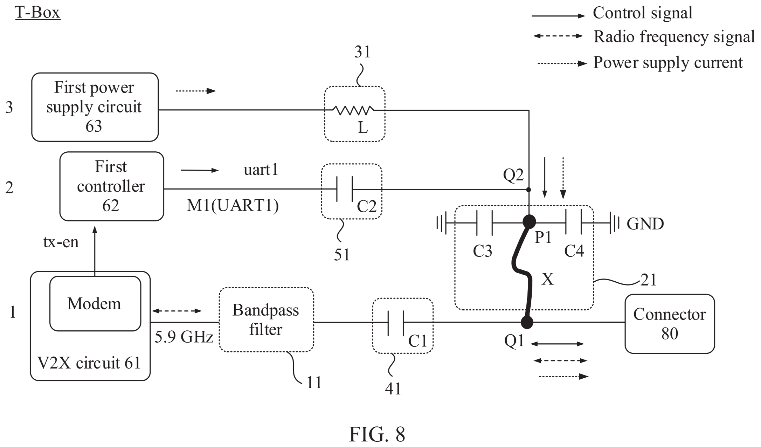

FIG. 8 is a framework diagram of a T-Box according to an embodiment of this application.

As shown in FIG. 8, in some embodiments, the first control signal end M1 includes a first gain control signal end UART1. The second branch 2 further includes a first controller 62, the first controller 62 is coupled to the first gain control signal end UART1, and the first controller 62 is configured to transmit a first gain control signal uart1 to the first gain control signal end UART1.

For example, the first controller 62 is further coupled to the V2X circuit 61. The V2X circuit 61 is configured to transmit a transmit/receive control signal tx-en. The transmit/receive control signal tx-en is used to indicate whether the T-Box transmits or receives a radio frequency signal. For example, when the transmit/receive control signal tx-en is 1, it indicates that the T-Box transmits the radio frequency signal. When the transmit/receive control signal tx-en is 0, it indicates that the T-Box receives the radio frequency signal.

For example, the V2X circuit 61 includes a modem (modem), and the modem is configured to output the transmit/receive control signal tx-en.

The first controller 62 receives the transmit/receive control signal tx-en, and after receiving the transmit/receive control signal tx-en, sends the first gain control signal uart1 to the first gain control signal end UART1 with reference to the transmit/receive control signal tx-en.

For example, the transmit/receive control signal tx-en received by the first controller 62 is used to indicate that the T-Box transmits the radio frequency signal. The first controller 62 sends the first gain control signal uart1 to the first gain control signal end UART1. The first gain control signal uart1 is used to represent a gain adjustment value of a relay for the radio frequency signal.

The transmit/receive control signal tx-en received by the first controller 62 is used to indicate that the T-Box receives the radio frequency signal. The first controller 62 does not send the first gain control signal uart1.

In some embodiments, the first controller 62 may be, for example, a microcontroller unit (microcontroller unit, MCU) of the T-Box. The first controller 62 may alternatively be a component disposed on the circuit board of the T-Box.

In addition, in some embodiments, the first gain control signal uart1 may be a signal that directly represents a gain value of the relay. After receiving the first gain control signal uart1, the relay may directly obtain the gain value.

In this case, for different vehicles 100, simulation detection may be performed before delivery, and gain values represented by first gain control signals may be preset in advance for different cable lengths.

For example, for a first type of vehicle, the first gain control signal uart1 sent by the first controller 62 directly represents that a gain value is 2. For a second type of vehicle, the first gain control signal uart1 sent by the first controller 62 directly represents that a gain value is 3.

In some other embodiments, the first gain control signal uart1 may be a signal carrying an obtained gain value. After receiving the first gain control signal uart1, the relay still needs to further process the first gain control signal uart1 to obtain the gain value.

In this case, for different vehicles 100, the first gain control signals uart1 sent by the first controller 62 may be the same. The relay further generates, based on different cable lengths and with reference to the first gain control signal uart1, a gain control signal representing the gain value. In this way, the signal transmission system can adapt to different vehicles 100.

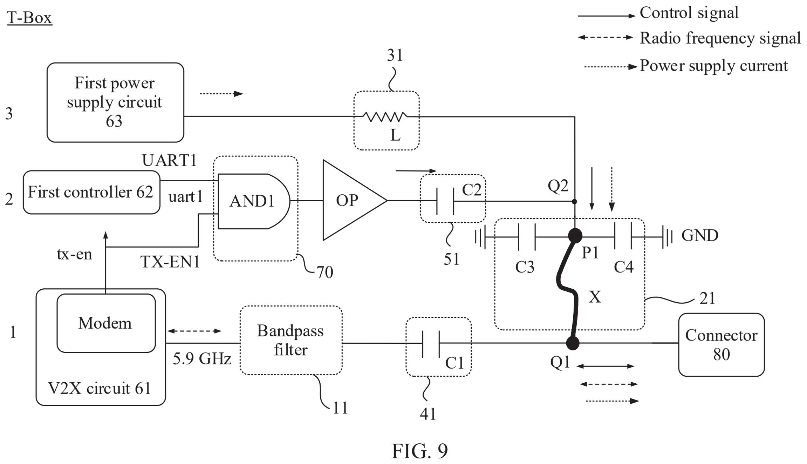

FIG. 9 is a framework diagram of a T-Box according to an embodiment of this application.

As shown in FIG. 9, in some embodiments, the first control signal end M1 further includes a first transmit/receive control signal end TX-EN1. The first transmit/receive control signal end TX-EN1 is coupled to the V2X circuit 61, and is configured to receive a transmit/receive control signal tx-en output by the V2X circuit 61.

The first controller 62 is configured to receive the transmit/receive control signal tx-en of the first transmit/receive control signal end TX-EN1, and output the first gain control signal uart1 to the first gain control signal end UART1.

For example, the first controller 62 is coupled to the first gain control signal end UART1 and the first transmit/receive control signal end TX-EN1.

In some embodiments, the second branch 2 further includes a modulation circuit 70. An input end of the modulation circuit 70 is coupled to the first gain control signal end UART1 and the first transmit/receive control signal end TX-EN1, and an output end of the modulation circuit 70 is coupled to the first radio frequency isolation circuit 21.

When the second branch 2 further includes the second direct current block and alternating current pass circuit 51, a second end of the modulation circuit 70 is coupled to the second direct current block and alternating current pass circuit 51.

In other words, the modulation circuit 70 modulates the first gain control signal uart1 and the first transmit/receive control signal tx-en, and then transmits the modulated first gain control signal uart1 and the modulated first transmit/receive control signal tx-en in the second branch 2. In this case, in addition to the first gain control signal uart1, the second branch 2 may further transmit the first transmit/receive control signal tx-en.

In some embodiments, the modulation circuit 70 includes a first AND gate AND1.

An input end of the first AND gate AND1 is coupled to both the first gain control signal end UART1 and the first transmit/receive control signal end TX-EN1, and an output end of the first AND gate AND1 is coupled to the first radio frequency isolation circuit 21.

In this case, the first AND gate AND1 may be understood as a dual AND gate. The first AND gate AND1 performs AND modulation on the first gain control signal and the first transmit/receive control signal, so that a modulation signal output by the first AND gate AND1 includes information about the first gain control signal and the first transmit/receive control signal.

After the transmit/receive control signal tx-en transmitted by the first transmit/receive control signal end TX-EN1 and the first gain control signal uart1 transmitted by the first gain control signal end UART1 are modulated by the modulation circuit 70, the second branch 2 may synchronously transmit the first transmit/receive control signal tx-en and the first gain control signal uart1 to the first combination point Q1, and transmit the first transmit/receive control signal tx-en and the first gain control signal uart1 through a cable. This increases the amount of information of the aggregated signal transmitted in the cable, and no separate first transmit/receive control signal tx-en branch needs to be disposed.

In some embodiments, the second branch 2 further includes an operational amplifier (operational amplifier, OP), and the operational amplifier OP is coupled between the modulation circuit 70 and the first radio frequency isolation circuit 21 (the second direct current block and alternating current pass circuit 51).

The operational amplifier OP is disposed at the output end of the modulation circuit 70, so that the signal modulated by the modulation circuit 70 can be amplified/attenuated and then transmitted to the first combination point Q1, to meet requirements of different application scenarios.

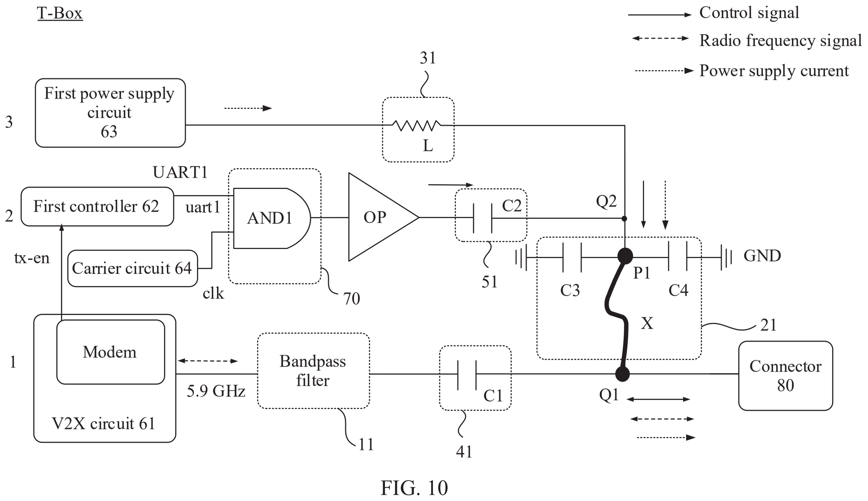

FIG. 10 is a framework diagram of a T-Box according to an embodiment of this application.

As shown in FIG. 10, in some embodiments, the second branch 2 further includes a carrier circuit 64, the carrier circuit 64 is configured to output a carrier signal, and the carrier circuit 64 is coupled to an input end of the modulation circuit 70.

For example, the carrier signal output by the carrier circuit 64 is a clock signal clk. For example, the clock signal clk is a signal whose frequency is at a hundred megahertz level. For example, the clock signal clk is a 125 MHz signal. Certainly, the clock signal clk may alternatively be a signal whose frequency is at another frequency.

For example, the carrier circuit 64 is a clock oscillator, and the clock oscillator is configured to generate a clock signal whose frequency is 125 MHz. Certainly, the clock signal generated by the clock oscillator may alternatively be at another frequency, provided that a frequency of the clock signal is different from a frequency of the radio frequency signal.

In this case, as shown in FIG. 10, the input end of the first AND gate AND1 is coupled to both the first gain control signal end UART1 and the carrier circuit 64, and the output end of the first AND gate AND1 is coupled to the first radio frequency isolation circuit 21. The first AND gate AND1 modulates the first gain control signal uart1 and the carrier signal. In this case, the first AND gate AND1 may be understood as a dual AND gate.

The carrier signal is set to carry and transmit the control signal, to assist in transmitting the control signal, thereby improving transmission effect of the control signal. In addition, the clock signal is used as the carrier signal, so that after receiving the modulation signal, the gain can easily separate the clock signal from the first gain control signal, and data is not easily lost during separation.

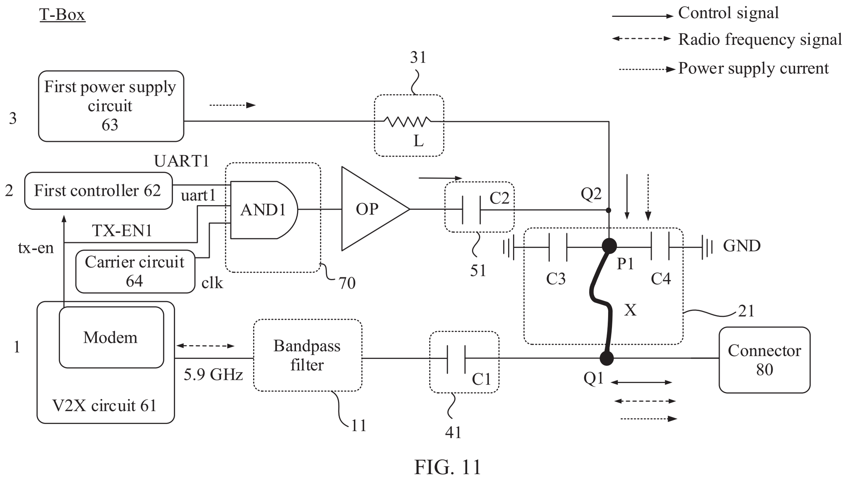

FIG. 11 is a framework diagram of a T-Box according to an embodiment of this application.

As shown in FIG. 11, in some embodiments, the second branch 2 includes the carrier circuit 64, and the first control signal end M1 includes both the first gain control signal end UART1 and the first transmit/receive control signal end TX-EN1.

In this case, for example, the modulation circuit 70 includes the first AND gate AND1, and the first AND gate AND1 may be understood as a triple AND gate.

The input end of the first AND gate AND1 is coupled to the carrier circuit 64, the first transmit/receive control signal end TX-EN1, and the first gain control signal end UART1, and the output end of the first AND gate AND1 is coupled to the second direct current block and alternating current pass circuit 51 or the operational amplifier OP.

In this case, the first AND gate AND1 may modulate the first gain control signal uart1, the first transmit/receive control signal tx-en, and the carrier signal, and transmit the modulated signal to the relay through the cable.

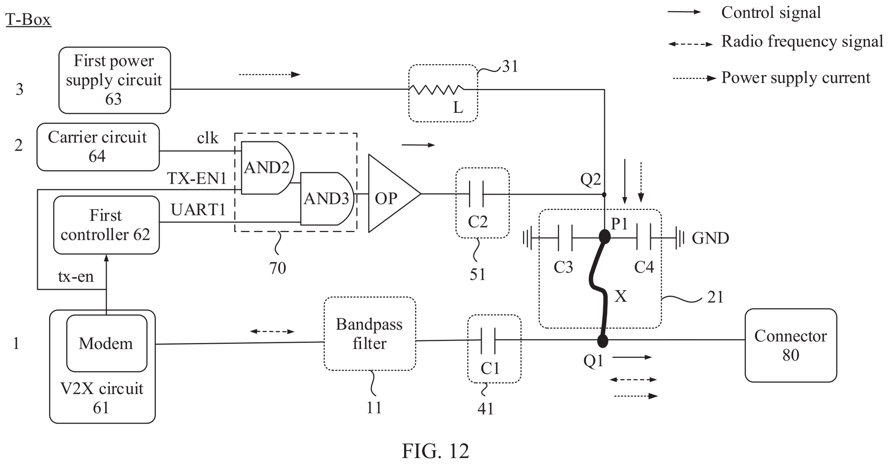

FIG. 12 is a framework diagram of a T-Box according to an embodiment of this application.

Alternatively, for example, the modulation circuit 70 includes a second AND gate AND2 and a third AND gate AND3, and both the second AND gate AND2 and the third AND gate AND3 are dual AND gates.

An input end of the second AND gate AND2 is coupled to two of the carrier circuit 64, the first transmit/receive control signal end TX-EN1, and the first gain control signal end UART1, and an output end of the second AND gate AND2 is coupled to an input end of the third AND gate AND3.

The input end of the third AND gate AND3 is further coupled to the remaining one of the carrier circuit 64, the first transmit/receive control signal end TX-EN1, and the first gain control signal end UART1, and an output end of the third AND gate AND3 is coupled to the first radio frequency isolation circuit 21 (the second direct current block and alternating current pass circuit 51).

It may also be understood that after two of the carrier circuit 64, the first transmit/receive control signal end TX-EN1, and the first gain control signal end UART1 are coupled to the second AND gate AND2, the other one is coupled to the third AND gate AND3 at the output end of the second AND gate AND2. In this embodiment of this application, which two of the carrier circuit 64, the first transmit/receive control signal end TX-EN1, and the first gain control signal end UART1 are first coupled to the second AND gate AND902 is not limited. FIG. 12 is merely an example.

For example, as shown in FIG. 12, the carrier circuit 64 and the first transmit/receive control signal end TX-EN1 are coupled to the input end of the second AND gate AND2. The output end of the second AND gate AND2 and the first gain control signal end UART1 are coupled to the input end of the third AND gate AND3. The output end of the third AND gate AND3 is coupled to the second direct current block and alternating current pass circuit 51 or the operational amplifier OP.

Alternatively, for example, the carrier circuit 64 and the first gain control signal end UART1 are coupled to the input end of the second AND gate AND2. The output end of the second AND gate AND2 and the first transmit/receive control signal end TX-EN1 are coupled to the input end of the third AND gate AND3.

Alternatively, for example, the first gain control signal end UART1 and the first transmit/receive control signal end TX-EN1 are coupled to the input end of the second AND gate AND2. The output end of the second AND gate AND2 and the carrier circuit 64 are coupled to the input end of the third AND gate AND3.

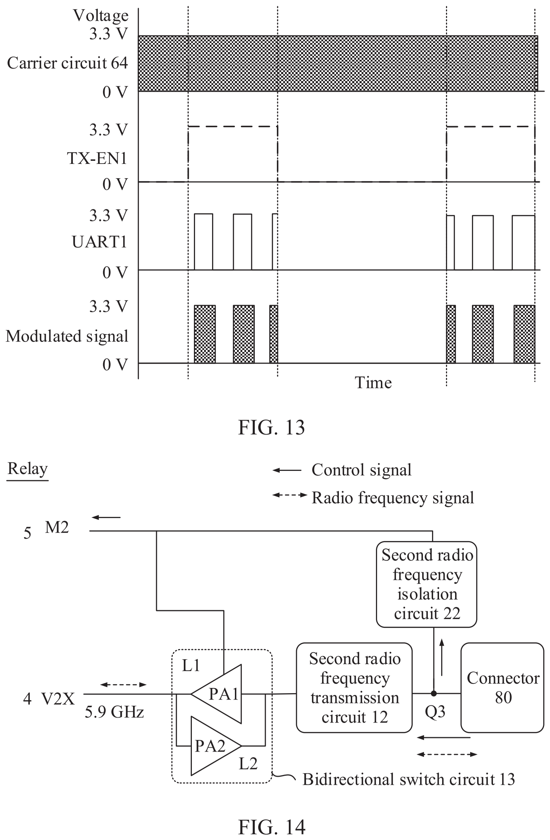

FIG. 13 is a diagram of a modulation result of a modulation circuit 70 according to an embodiment of this application.

In FIG. 13, a horizontal coordinate represents time, and a vertical coordinate represents a voltage. From top to bottom, there are waveform diagrams of a signal of the carrier circuit 64, a signal of the first transmit/receive control signal end TX-EN1, a signal of the first gain control signal end UART1, and a modulated signal. After being modulated by the modulation circuit 70, the modulated signal includes the signal of the carrier circuit 64, the signal of the first transmit/receive control signal end TX-EN1, and the signal of the first gain control signal end UART1. One signal carries three types of information.

Example 2

FIG. 14 is a framework diagram of a relay according to an embodiment of this application.

This embodiment of this application provides a relay. As shown in FIG. 14, the relay includes a fourth branch 4 and a fifth branch 5.

The fourth branch 4 includes a vehicle-to-anything V2X signal end and a bidirectional switch circuit 13. The bidirectional switch circuit 13 includes a first path L1 and a second path L2 that are coupled in parallel between the V2X signal end and a third combination point Q3. The first path L1 includes a first power amplifier (power amplifier) PA1. An output end of the first power amplifier PA1 is coupled to the V2X signal end.

The V2X signal end is coupled to an antenna, and is configured to transmit and receive a radio frequency signal. The V2X signal end may be configured to receive the radio frequency signal, and the V2X signal end may also be configured to transmit the radio frequency signal. The radio frequency signal may be the same as the radio frequency signal in the example 1, and details are not described herein again.

When the relay is configured to receive the radio frequency signal sent by a T-Box, the third combination point Q3 receives the radio frequency signal, and transmits the radio frequency signal to the V2X signal end through the first path L1 (the first power amplifier PA1).

When the relay is configured to transmit a signal to the T-Box, the radio frequency signal sent by the V2X signal end is transmitted to the third combination point Q3 through the second path S2.

It may also be understood that the radio frequency signal is transmitted in the fourth branch 4, the radio frequency signal may be transmitted from the V2X signal end to the third combination point Q3, and the radio frequency signal may also be transmitted from the third combination point Q3 to the V2X signal end.

The bidirectional switch circuit is a circuit including a bidirectional line, and a signal may be transmitted in two directions. However, the signal can be transmitted in only one direction at a same moment, and cannot be transmitted in the two directions at the same moment.

In some embodiments, the bidirectional switch circuit is, for example, a half-duplex (half duplex) circuit.

In this case, when the relay is configured to receive a signal, the first path L1 is on. When the relay is configured to transmit a signal, the second path S2 is on.

The fifth branch 5 includes a second control signal end M2 and a second radio frequency isolation circuit 22. The second control signal end M2 is coupled to the bidirectional switch circuit 13. The second radio frequency isolation circuit 22 is coupled between the second control signal end M2 and the third combination point Q3.

The second control signal end M2 is configured to receive a control signal, and the control signal received by the second control signal end M2 matches the control signal sent by the first control signal end M1 in the T-Box.

It may also be understood that the control signal is transmitted in the fifth branch 5, and the control signal may be transmitted from the third combination point Q3 to the second control signal end M2.

For example, the control signal is a control signal transmitted by the T-Box. For details, refer to the related description of the control signal in Example 1. Details are not described herein again.

In this case, when the relay is configured to transmit the signal, the radio frequency signal transmitted in the fourth branch 4 is output through the third combination point Q3. When the relay is configured to receive the signal, a radio frequency signal in an aggregated signal (including the radio frequency signal and the control signal) transmitted through the third combination point Q3 is transmitted to the V2X signal end through the fourth branch 4, and a control signal (that is, the modulation signal described above) in the aggregated signal is transmitted to the second control signal end M2 through the fifth branch 5.

In some embodiments, to prevent interference between signals on the fourth branch 4 and the fifth branch 5, the second radio frequency isolation circuit 22 in the fifth branch 5 is configured to transmit the control signal and isolate the radio frequency signal.

In some embodiments, the fourth branch 4 further includes a second radio frequency transmission circuit 12, the second radio frequency transmission circuit 12 is coupled between the bidirectional switch circuit 13 and the third combination point Q3, and the second radio frequency transmission circuit 12 is configured to transmit the radio frequency signal and isolate the control signal.

For example, the second radio frequency transmission circuit 12 includes a bandpass filter. The second radio frequency transmission circuit 12 may be the same as the first radio frequency transmission circuit 11, or the second radio frequency transmission circuit 12 and the first radio frequency transmission circuit 11 may be different.

In some embodiments, as shown in FIG. 14, the second path S2 in the bidirectional switch circuit 13 includes a second power amplifier PA2.

For example, the second power amplifier PA2 includes a low noise amplifier (low noise amplifier, LNA), and an output end of the LNA is coupled to the third combination point Q3.

Based on this, optionally, the second control signal end M2 is coupled to the bidirectional switch circuit 13. The second control signal end M2 may be separately coupled to a first power amplifier OP1 and a second power amplifier OP2.

For example, the control signal includes a first gain control signal, and the first gain control signal is used to control amplification multiples of the first power amplifier OP1 and the second power amplifier OP2.

In this case, the second control signal end M2 includes a second gain control signal end, and the second gain control signal end is separately coupled to the first power amplifier OP1 and the second power amplifier OP2.

Alternatively, for example, the control signal further includes a transmit/receive control signal, and the transmit/receive control signal is further used to control the first power amplifier OP1 or the second power amplifier OP2 to be turned on.

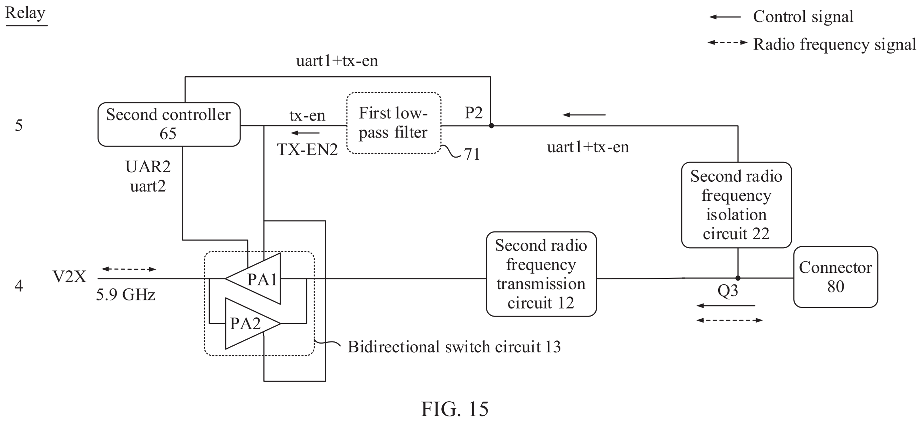

In this case, as shown in FIG. 15, the second control signal end M2 includes a second gain control signal end UART2 and a second transmit/receive control signal end TX-EN2, and the second transmit/receive control signal end TX-EN2 is separately coupled to the first power amplifier OP1 and the second power amplifier OP2.

In this way, when the radio frequency signal is transmitted on the second path S2, the low noise amplifier may amplify the radio frequency signal based on a requirement.

In some embodiments, the relay further includes a connector 80.

One end of the connector 80 is coupled to the third combination point Q3, and the other end of the connector 80 is configured to be coupled to a cable.

In some embodiments, as shown in FIG. 15, the fifth branch 5 further includes a second controller 65 and a first frequency band block circuit 71.

The first frequency band block circuit 71 is coupled between the second transmit/receive control signal end TX-EN2 and the second node P2, and the second node P2 is coupled to the second radio frequency isolation circuit 22.

A block frequency band of the first frequency band block circuit 71 matches a frequency band of the first gain control signal uart1, and the first frequency band block circuit 71 is configured to block the first gain control signal uart1 and transmit the transmit/receive control signal tx-en.

For example, the first frequency band block circuit 71 includes a low-pass filter or a detector.

The control signal received by the third combination point Q3 includes the first gain control signal uart1 and the transmit/receive control signal tx-en, and the control signal is transmitted to the second node P2. The first frequency band block circuit 71 blocks the first gain control signal uart1, and transmits the transmit/receive control signal tx-en to the second transmit/receive control signal end TX-EN2 by using the transmit/receive control signal tx-en. The second transmit/receive control signal end TX-EN2 is coupled to the bidirectional switch circuit 13, and is configured to control the first power amplifier PA1 or the second power amplifier PA2 to be turned on.

The second controller 65 is configured to output the second gain control signal uart2 to the second gain control signal end UART2 after receiving the transmit/receive control signal tx-en of the second transmit/receive control signal end TX-EN2 and the control signal of the second node P2.

For example, an output end of the second controller 65 is coupled to the second gain control signal end UART2, and an input end of the second controller 65 is coupled to the second transmit/receive control signal end TX-EN2 and the second node P2. The second controller 65 is configured to receive the transmit/receive control signal tx-en of the second transmit/receive control signal end TX-EN2 and the control signal of the second node P2, and output the second gain control signal uart2 to the second gain control signal end UART2 based on the transmit/receive control signal tx-en and the control signal of the second node P2.

The modulation signal (control signal) at the second node P2 and the transmit/receive control signal tx-en of the second transmit/receive control signal end TX-EN2 are both transmitted to the second controller 65. The second controller 65 determines, based on the transmit/receive control signal tx-en, whether the relay is used to send a signal or receive a signal. When the relay is used to receive a signal, the second controller 65 decodes the modulation signal to generate the second gain control signal uart2, and the second gain control signal uart2 is transmitted to the bidirectional switch circuit 13 to control the gain of the first power amplifier PA1. When the relay is used to send the signal, the second controller 65 does not decode the modulation signal, and the gain of the second power amplifier PA2 is a specified gain.

The second controller 65 may be, for example, an MCU of the relay, or the second controller 65 may be a component disposed on a circuit board of the relay.

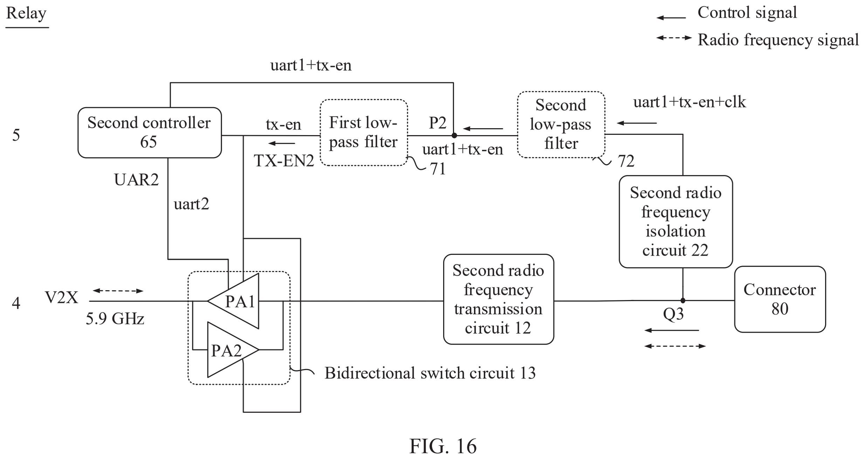

FIG. 16 is a framework diagram of a relay according to an embodiment of this application.

As shown in FIG. 16, in some embodiments, the fifth branch 5 further includes a second frequency band block circuit 72, and the second frequency band block circuit 72 is coupled between the second node P2 and the second radio frequency isolation circuit 22.

A block frequency band of the second frequency band block circuit 72 matches a frequency band of the carrier signal (for example, the clock signal clk), is configured to block the carrier signal, and is configured to transmit the first gain control signal uart1 and the transmit/receive control signal tx-en.

For example, the second frequency band block circuit 72 includes a low-pass filter or a detector.

In some embodiments, a block frequency of the second frequency band block circuit 72 is higher than a block frequency band of the first frequency band block circuit 71.

In this case, after the modulation signal transmitted by the second radio frequency isolation circuit 22 is blocked by the second frequency band block circuit 72 for the first time, the clock signal clk, the first gain control signal uart1, and the transmit/receive control signal tx-en are removed, and the modulation signal is transmitted to the second node P2 and then to the second controller 65 and the first frequency band block circuit 71. Then, the first frequency band block circuit 71 filters out the first gain control signal uart1, and transmits the transmit/receive control signal tx-en to the second transmit/receive control signal end TX-EN2. The second controller 65 identifies the first gain control signal uart1 and outputs the second gain control signal uart2.

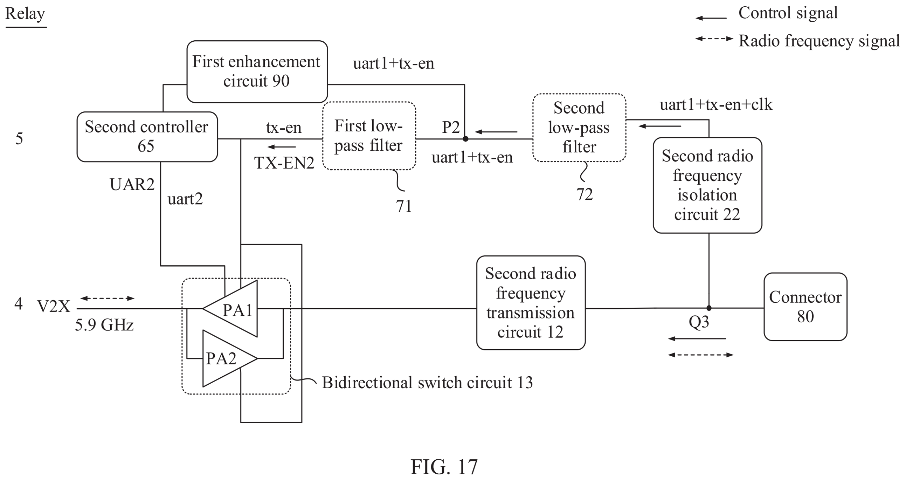

FIG. 17 is a framework diagram of a relay according to an embodiment of this application.

In some embodiments, as shown in FIG. 17, the fifth branch 5 further includes a first signal enhancement circuit 90. The first signal enhancement circuit 90 is coupled between the second controller 65 and the second node P2.

The first signal enhancement circuit 90 is configured to enhance a signal of the second node P2 and then transmit the enhanced signal to the second controller 65. An enhancement manner includes but is not limited to amplification. A structure of the first signal enhancement circuit 90 is not limited in this embodiment of this application. Any circuit that can enhance signal strength is applicable to this embodiment of this application.

The first signal enhancement circuit 90 is disposed between the second controller 65 and the second node P2, so that the signal of the second node P2 may be enhanced and then transmitted to the second controller 65, to improve signal processing accuracy.

In some embodiments, the fifth branch 5 further includes a second signal enhancement circuit, and the second signal enhancement circuit is coupled between the second controller 65 and the second transmit/receive control signal end TX-EN2.

The second signal enhancement circuit is configured to enhance a signal of the second transmit/receive control signal end TX-EN2 and then transmit the enhanced signal to the second controller 65. An enhancement manner includes but is not limited to amplification. A structure of the second signal enhancement circuit is not limited in this embodiment of this application. Any circuit that can enhance signal strength is applicable to this embodiment of this application.

The second signal enhancement circuit is disposed between the second controller 65 and the second transmit/receive control signal end TX-EN2, so that the signal of the second transmit/receive control signal end TX-EN2 may be enhanced and then transmitted to the second controller 65, to improve signal accuracy.

In some other embodiments, the fifth branch 5 further includes a third signal enhancement circuit, and the third signal enhancement circuit is coupled between the second node P2 and the second radio frequency isolation circuit 22.

The third signal enhancement circuit is configured to enhance a modulation signal output by the second radio frequency isolation circuit 22 and then output the modulation signal. An enhancement manner includes but is not limited to amplification. A structure of the third signal enhancement circuit is not limited in this embodiment of this application. Any circuit that can enhance signal strength is applicable to this embodiment of this application.

The second signal enhancement circuit is disposed between the second node P2 and the second radio frequency isolation circuit 22, so that the signal output by the second radio frequency isolation circuit 22 may be enhanced and then transmitted to the second node P2, to improve signal accuracy.

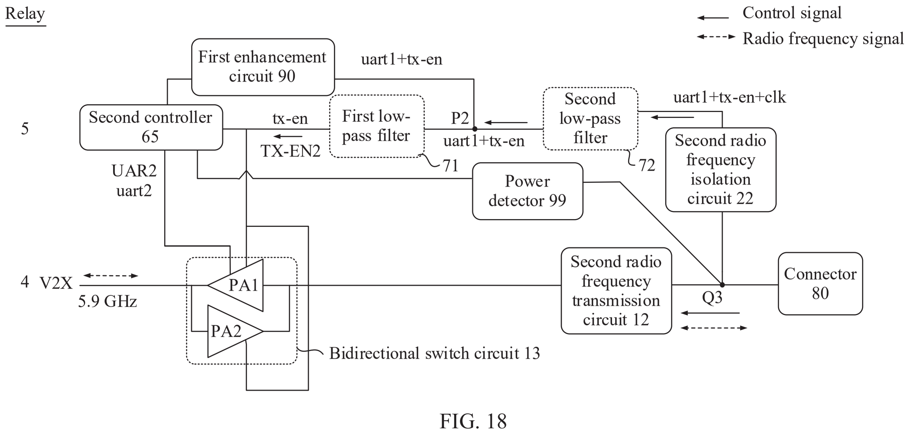

FIG. 18 is a framework diagram of a relay according to an embodiment of this application.

In some embodiments, as shown in FIG. 18, the relay further includes a power detector 99. The power detector 99 is separately coupled to the second controller 65 and the third combination point Q3. The second controller 65 is further configured to receive, before outputting the second gain control signal uart2 to the second gain control signal end UART2, a power signal sent by the power detector.

Specifically, the second gain control signal uart2 is determined based on the first gain control signal uart1 and the power signal.

For example, the power detector 99 may be a power detector diode. The power detector 99 is configured to convert radio frequency signal strength at the third combination point Q3 into a voltage value, determine power of the radio frequency signal based on the voltage value, and notify the second controller 65 of the power signal. The second controller 65 outputs the second gain control signal uart2 based on the first gain control signal uart1 (representing power strength of the radio frequency signal output by the T-Box) and the power signal (representing power strength of the radio frequency signal after cable loss) output by the power detector 99, to perform corresponding gain control on the first power amplifier PA1. A gain value of the second gain control signal uart2 output by the second controller 65 varies with a length of a cable, so that the signal transmission system has a function of adapting to different cable lengths, and the signal transmission system provided in this embodiment of this application can be used in a vehicle 100 with cables of various lengths.

For example, a cable loss may be obtained by comparing a difference between the first gain control signal uart1 and the power signal output by the power detector 99. A gain of the first power amplifier PA1 is converted based on the cable loss (for example, a comparison table between the cable loss and the gain is stored in the second controller 65), and the second gain control signal uart2 is output to the first power amplifier PA1, so that power of a signal output by the first power amplifier PA1 is the same as that of the first gain control signal uart1. Alternatively, the power of a signal output by the first power amplifier PA1 is different from that of the first gain control signal uart1, but a difference between the two is within an acceptable cable loss range.

For example, the power detector 99 may be coupled to the third combination point Q3. Alternatively, for example, the power detector 99 may be coupled between the second radio frequency transmission circuit 12 and the bidirectional switch circuit 13. The power detector 99 may receive the radio frequency signal.

Certainly, in some embodiments, the relay may not include the power detector 99. The T-Box is pre-known of cable losses based on different cable lengths, and outputs the first gain control signal uart1 matching the cable loss. The first gain control signal uart1 may control the gain of the first power amplifier PA1. In this way, when the signal transmission system is used in different vehicles 100, only the first gain control signal uart1 needs to be preset in the signal transmission system. The signal transmission system provided in this embodiment of this application may still be used in vehicles 100 with various cable lengths.

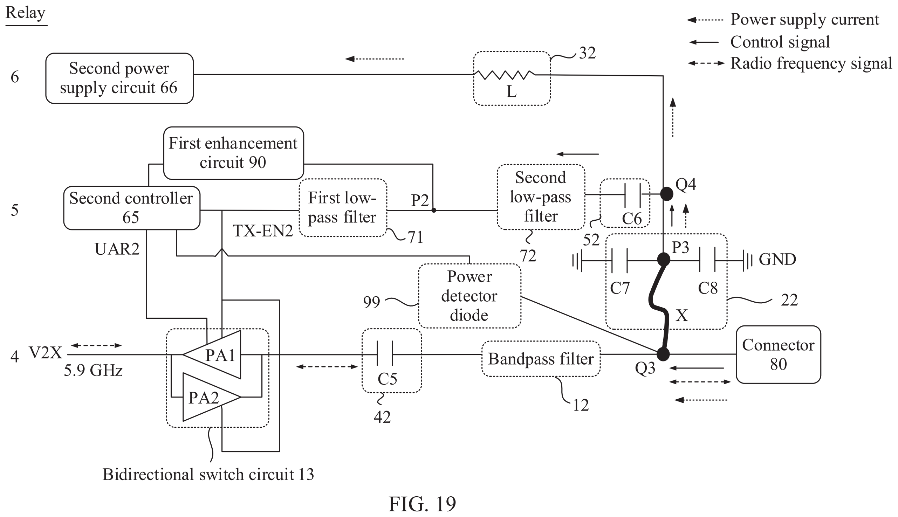

FIG. 19 is a diagram of a topology structure of a relay according to an embodiment of this application.

In some embodiments, as shown in FIG. 19, the relay further includes a sixth branch 6, and the sixth branch 6 includes a second power supply circuit 66.

The second power supply circuit 66 is coupled to a fourth combination point Q4, and the fourth combination point Q4 is located between the second radio frequency isolation circuit 22 and the second control signal end M2.

For example, the fourth combination point Q4 is located between the second radio frequency isolation circuit 22 and the second frequency band block circuit 72.

The second power supply circuit 66 is configured to receive a direct current. After receiving the direct current, the second power supply circuit 66 may convert the direct current and then supply the direct current to the relay, or may directly supply the direct current to the relay. This is not limited in this embodiment of this application.

In some embodiments, as shown in FIG. 19, the fourth branch 4 further includes a third direct current block and alternating current pass circuit 42, and the third direct current block and alternating current pass circuit 42 is coupled between the bidirectional switch circuit 13 and the third combination point Q3.

A structure of the third direct current block and alternating current pass circuit 42 is not limited in this embodiment of this application. For example, the third direct current block and alternating current pass circuit 42 includes a third direct current block capacitor C5, and a structure of the third direct current block capacitor C5 may be the same as that of the first direct current block capacitor C1.

In some embodiments, the fifth branch 5 further includes a fourth direct current block and alternating current pass circuit 52, and the fourth direct current block and alternating current pass circuit 52 is coupled between the second control signal end M2 (the second frequency band block circuit 72) and the fourth combination point Q4.

A structure of the fourth direct current block and alternating current pass circuit 52 is not limited in this embodiment of this application. For example, the fourth direct current block and alternating current pass circuit 52 includes a fourth direct current block capacitor C6, and a structure of the fourth direct current block capacitor C6 may be the same as that of the second direct current block capacitor C2.

In some embodiments, the sixth branch 6 further includes a second direct current pass and alternating current block circuit 32, and the second direct current pass and alternating current block circuit 32 is coupled between the second power supply circuit 66 and the fourth combination point Q4.

A structure of the second direct current pass and alternating current block circuit 32 is not limited in this embodiment of this application. For example, the second direct current pass and alternating current block circuit 32 includes an equivalent inductor L.

In some embodiments, a structure of the second radio frequency isolation circuit 22 may be the same as that of the first radio frequency isolation circuit 21.

For example, as shown in FIG. 19, the second radio frequency isolation circuit 22 includes a $(1/4+N/2)\lambda$ transmission line X, a first end of the $(1/4+N/2)\lambda$ transmission line X is coupled to the third combination point Q3, and a second end of the $(1/4+N/2)\lambda$ transmission line X is coupled to the third node P3. The third node P3 is coupled to the fourth node Q4, and the fourth node Q4 is separately coupled to the second control signal end M2 and the second power supply circuit 66.

In some embodiments, the second radio frequency isolation circuit 22 further includes a third capacitor C7 and a fourth capacitor C8.

A first end of the third capacitor C7 and first end of the fourth capacitor C8 are both coupled to a reference ground voltage end GND, and a second end of the third capacitor C7 and second end of the fourth capacitor C8 are both coupled to the third node P3.

After receiving the control signal sent by the T-Box, the relay provided in this embodiment of this application adjusts the relay based on the control signal, so that the relay has a dynamic adjustment function, to meet requirements in different application scenarios. When the control signal includes a first gain control signal, the relay may adjust a gain value of the relay based on the first gain control signal, to adapt to cable losses in different vehicles 100. In this way, one signal transmission system can adapt to different vehicles 100, so that adaptability is extremely high and costs are low.

Example 3

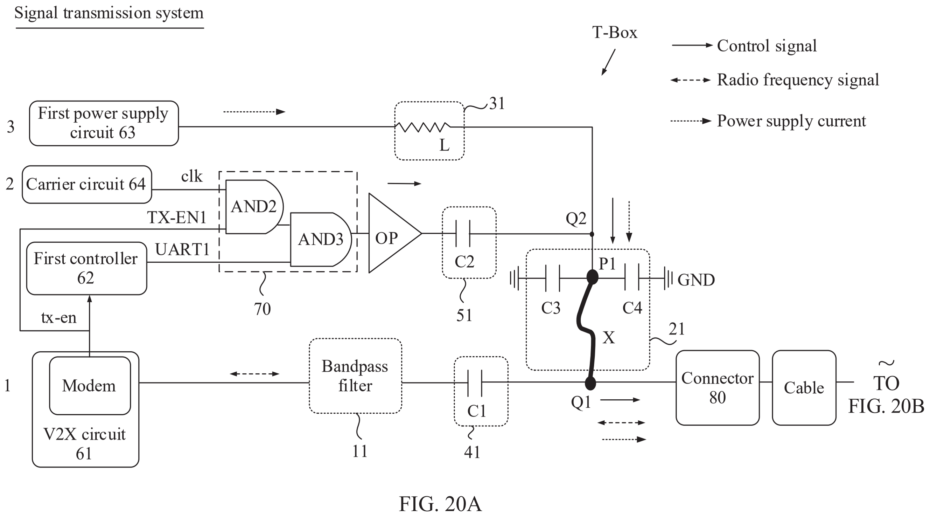

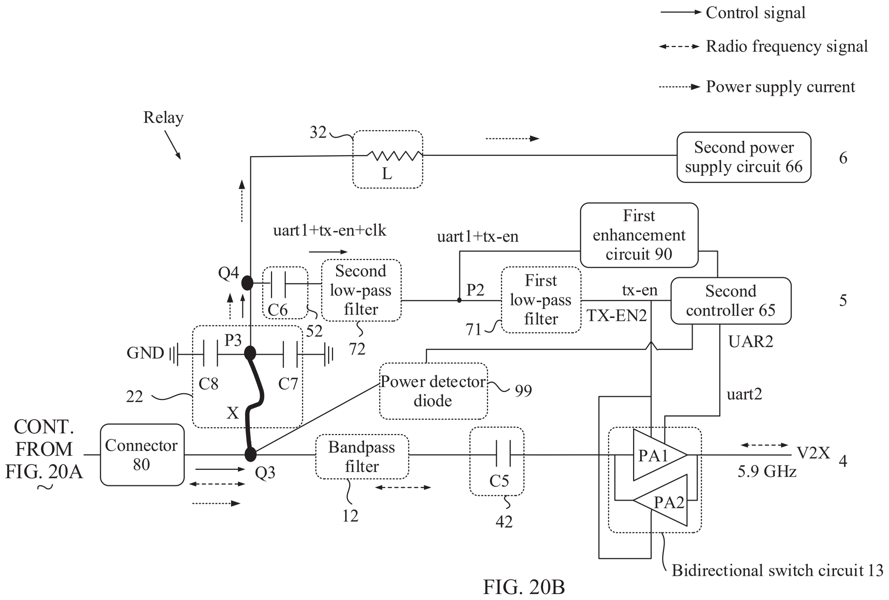

FIG. 20A and FIG. 20B are a diagram of an architecture of a signal transmission system according to an embodiment of this application.

This embodiment of this application provides a signal transmission system. As shown in FIG. 20A and FIG. 20B, the signal transmission system includes a T-Box, a cable, and a relay. Two ends of the cable are respectively coupled to a connector 80 in the T-Box and a connector 80 in the relay.

It should be understood that the connector 80 in the T-Box and the connector 80 in the relay may be the same or different. This is not limited in this embodiment of this application.

A V2X signal end of the relay in the signal transmission system is configured to be coupled to an antenna. When the signal transmission system is used in a vehicle, the antenna is a V2X antenna of the vehicle.

In some embodiments, the T-Box in the signal transmission system includes any T-Box shown in Example 1, and the relay in the signal transmission system includes any relay shown in Example 2. FIG. 20A and FIG. 20B are merely an example, and this is not limited.

The following uses FIG. 20A and FIG. 20B as an example to describe a communication process of the signal transmission system.

The T-Box transmits an aggregated signal to the relay. The aggregated signal includes the radio frequency signal transmitted in the first branch 1, the modulation signal (including a signal of the carrier circuit 64, a signal of the first gain control signal end UART1, and a signal of the first transmit/receive control signal end TX-EN1) transmitted in the second branch 2, and a power supply current transmitted in the third branch 3. The aggregated signal is transmitted to the relay through the cable, and a signal received at the third combination point Q3 of the relay is the aggregated signal.

The radio frequency signal in the aggregated signal is isolated by the second radio frequency isolation circuit 22, and cannot reach the fifth branch 5 and the sixth branch 6. However, the radio frequency signal may be transmitted to the bidirectional switch circuit 13 in the fourth branch 4.

The power supply current in the aggregated signal is isolated by the third direct current block and alternating current pass circuit 42 and the fourth direct current block and alternating current pass circuit 52, and cannot reach the fourth branch 4 and the fifth branch 5. However, the power supply current may be transmitted only to the second power supply circuit 66 in the sixth branch 6.

The modulation signal in the aggregated signal is isolated by the second radio frequency transmission circuit 12, and cannot reach the fourth branch 4. However, the modulation signal may reach the fourth node Q4 through the second radio frequency isolation circuit 22. After reaching the fourth node Q4, the modulation signal is isolated by the second direct current pass and alternating current block circuit 32, and cannot reach the sixth branch 6, but the modulation signal can reach the fifth branch 5.

The modulation signal includes the carrier signal (for example, the clock signal clk) output by the carrier circuit 64, the first gain control signal uartl output by the first gain control signal end UART1, and the transmit/receive control signal tx-en output by the first transmit/receive control signal end TX-EN1. The clock signal clk in the modulation signal is blocked by the second frequency band block circuit 72, and cannot reach the second node P2. However, the first gain control signal uart1 and the transmit/receive control signal tx-en in the modulation signal can reach the second node P2. The first gain control signal uart1 in the second node P2 is blocked by the first frequency band block circuit 71, and cannot be transmitted to the second transmit/receive control signal end TX-EN2. However, the transmit/receive control signal tx-en can be transmitted to the second transmit/receive control signal end TX-EN2. The transmit/receive control signal tx-en is transmitted to the bidirectional switch circuit 13 through the second transmit/receive control signal end TX-EN2, to control the first power amplifier PA1 in the bidirectional switch circuit 13 to be turned on and the second control amplifier PA2 to be turned off. Similarly, the modulation signal that includes the first gain control signal uart1 and the transmit/receive control signal tx-en at the second node P2 is transmitted to the second controller 65, and the transmit/receive control signal tx-en at the second transmit/receive control signal end TX-EN2 is also transmitted to the second controller 65. The second controller 65 determines, based on the transmit/receive control signal tx-en, whether to decode the modulation signal, to adjust whether to output the second gain control signal uart2.

For example, when tx-en=1, the first power amplifier PA1 is turned on, and the second power amplifier PA2 is turned off. When tx-en=0, the first power amplifier PA1 is turned off, and the second power amplifier PA2 is turned on. When tx-en=0, the second controller 65 does not decode the modulation signal, and the second power amplifier PA2 performs amplification based on a specified gain. When tx-en=1, the second controller 65 decodes the modulation signal, and outputs the second gain control signal uart2, to control the gain of the first power amplifier PA1.

When the signal transmission system is configured to transmit a signal to the antenna, tx-en=1, the first power amplifier PA1 is turned on, and the second power amplifier PA2 is turned off. In addition, the second controller 65 decodes the modulation signal, and outputs the second gain control signal uart2, to control the gain of the first power amplifier PA1. The radio frequency signal transmitted by the T-Box to the fourth branch 4 is amplified by the first power amplifier PA1, and then is transmitted to the antenna through the V2X signal end, to complete transmitting the signal to the antenna.

It should be noted that, with reference to the foregoing descriptions about the T-Box, the first gain control signal uart1 included in the modulation signal may be two types of signals. First type: The first gain control signal uartl directly includes information indicating a specific gain value of the first power amplifier PA1. Second type: The first gain control signal uart1 carries information that can be used to obtain a specific gain value of the first power amplifier PA1. For the first case, the second controller 65 decodes the modulation signal, and may directly obtain the gain value and output the gain value as the second gain control signal uart2. In this case, a cable loss is learned of in advance, and the gain value is set, so that the signal transmission system can adapt to different vehicles 100. For the second case, the second controller 65 decodes the modulation signal, and after processing the modulation signal and the signal input by the power detector 99, may obtain the gain value and output the gain value as the second gain control signal uart2. In this case, the cable loss does not need to be learned of in advance. The second controller 65 automatically calculates the cable loss, and outputs the adapted gain value, so that the signal transmission system adapts to different vehicles 100 adaptively.

When the signal transmission system is configured to receive the signal sent by the antenna, tx-en=0, the first power amplifier PA1 is turned off, and the second power amplifier PA2 is turned on. In addition, the second controller 65 does not decode the modulation signal. The radio frequency signal sent by the antenna is amplified by the second power amplifier PA2 and then transmitted to the third combination point Q3. The third combination point Q3 transmits the radio frequency signal to the first combination point Q1 through the cable. The first radio frequency isolation circuit 21 blocks the radio frequency signal, and the radio frequency signal is not transmitted to the second combination point Q2. However, the radio frequency signal may be transmitted to the V2X circuit 61 through the first radio frequency transmission circuit 11, to receive an antenna signal.

In some embodiments, the radio frequency signal sent by the V2X circuit 61 in the T-Box is set to conventional power. However, under a special instruction, the power of the radio frequency signal sent by the T-Box is adjustable. The power of the radio frequency signal sent by the V2X circuit 61 in the T-Box may be adjusted to adapt to different scenarios.

In some embodiments, the power of the radio frequency signal sent by the T-Box needs to be weakened.

For example, when the vehicle 100 approaches an electronic toll collection (electronic toll collection, ETC) system, to avoid interference of the radio frequency signal with an ETC signal, a frequency band of the radio frequency signal may be adjusted. In this case, the T-Box determines whether the vehicle 100 is located at an ETC toll station. If the vehicle 100 is located at the ETC toll station, the T-Box adjusts (for example, reduces) the power of the radio frequency signal sent by the V2X circuit 61, and the relay still performs gain compensation according to the original solution, to reduce the power of the radio frequency signal received by the antenna and weaken interference.

A manner in which the T-Box determines whether the vehicle 100 is located at the ETC toll station is not limited in this embodiment of this application. Solutions in a related technology are all applicable to this embodiment of this application. For example, whether the vehicle 100 is located at the ETC toll station may be determined by using a global positioning system (global positioning system, GPS).

In some other embodiments, the power of the radio frequency signal sent by the T-Box needs to be enhanced.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1.  A telematics communication terminal T-Box, comprising:

    a first branch (1), comprising a vehicle to everything V2X circuit (61) and a first radio frequency transmission circuit (11), wherein the first radio frequency transmission circuit (11) is coupled between the V2X circuit (61) and a first combination point (Q1), and the V2X circuit (61) is configured to transmit and receive a radio frequency signal; and

a second branch (2), comprising a first control signal end (M1) and a first radio frequency isolation circuit (21), wherein the first radio frequency isolation circuit (21) is coupled between the first control signal end (M1) and the first combination point (Q1), and the first control signal end (M1) is configured to output a control signal, wherein

the first radio frequency transmission circuit (11) is configured to transmit the radio frequency signal and isolate the control signal, and the first radio frequency isolation circuit (21) is configured to transmit the control signal and isolate the radio frequency signal.

2. The T-Box according to claim 1, wherein the first radio frequency isolation circuit (21) comprises a $(1/4+N/2)\lambda$ transmission line (X), a first end of the $(1/4+N/2)\lambda$ transmission line (X) is coupled to the first combination point (Q1), a second end of the $(1/4+N/2)\lambda$ transmission line (X) is coupled to a first node (P1), and the first node (P1) is coupled to the first control signal end (M1); and

$\lambda$ is a wavelength of the radio frequency signal, and N is an integer greater than or equal to 0.

3. The T-Box according to claim 2, wherein the first radio frequency isolation circuit (21) further comprises a first capacitor (C3) and a second capacitor (C4); and

a first end of the first capacitor (C3) and a first end of the second capacitor (C4) are both coupled to a reference ground voltage end (GND), and a second end of the first capacitor (C3) and a second end of the second capacitor (C4) are both coupled to the first node (P1).

4. The T-Box according to claim 1, wherein the first radio frequency isolation circuit (21) comprises an isolator.

5. The T-Box according to any one of claims 1 to 4, wherein the T-Box further comprises a third branch (3); and

the third branch (3) comprises a first power supply circuit (63), the first power supply circuit (63) is coupled to a second combination point (Q2), and the second combination point (Q2) is located between the first radio frequency isolation circuit (21) and the first control signal end (M1).

6. The T-Box according to claim 5, wherein the first branch (1) further comprises a first direct current block and alternating current pass circuit (41), and the first direct current block and alternating current pass circuit (41) and the first radio frequency transmission circuit (11) are coupled in series between the V2X circuit (61) and the first combination point (Q1); and/or

the second branch (2) further comprises a second direct current block and alternating current pass circuit (51), and the second direct current block and alternating current pass circuit (51) is coupled between the first control signal end (M1) and the second combination point (Q2); and/or

the third branch (3) further comprises a first direct current pass and alternating current block circuit (31), and the first direct current pass and alternating current block circuit (31) is coupled between the first power supply circuit (63) and the second combination point (Q2).

7. The T-Box according to any one of claims 1 to 6, wherein the first control signal end (M1) comprises a first gain control signal end (UART1) and a first transmit/receive control signal end (TX-EN1).

8. The T-Box according to claim 7, wherein the second branch (2) further comprises a first controller (62), and the first controller (62) is configured to output a first gain control signal (uart1) to the first gain control signal end (UART1) after receiving a transmit/receive control signal (tx-en) from the first transmit/receive control signal end (TX-EN1).

9. The T-Box according to claim 7 or 8, wherein the first controller (62) is coupled to the first gain control signal end (UART1) and the first transmit/receive control signal end (TX-EN1), and the V2X circuit (61) is coupled to the first transmit/receive control signal end (TX-EN1).

10. The T-Box according to any one of claims 7 to 9, wherein the second branch (2) further comprises a modulation circuit (70); and

an input end of the modulation circuit (70) is coupled to the first gain control signal end (UART1) and the first transmit/receive control signal end (TX-EN1), and an output end of the modulation circuit (70) is coupled to the first radio frequency isolation circuit (21).

11. The T-Box according to claim 10, wherein the second branch (2) further comprises a carrier circuit (64), the carrier circuit (64) is configured to output a carrier signal, and the carrier circuit (64) is coupled to the input end of the modulation circuit (70).

12. A relay, comprising:

a fourth branch (4), comprising a vehicle to everything V2X signal end and a bidirectional switch circuit (13), wherein the bidirectional switch circuit (13) comprises a first path (L1) and a second path (L2) that are coupled in parallel between the V2X signal end and a third combination point (Q3), the first path (L1) comprises a first power amplifier (PA1), an output end of the first power amplifier (PA1) is coupled to the V2X signal end, and the V2X signal end is configured to transmit and receive a radio frequency signal; and

a fifth branch (5), comprising a second control signal end (M2) and a second radio frequency isolation circuit (22), wherein the second control signal end (M2) is coupled to the bidirectional switch circuit (13), the second radio frequency isolation circuit (22) is coupled between the second control signal end (M2) and the third combination point (Q3), the second control signal end (M2) is configured to receive a control signal, and the second radio frequency isolation circuit (22) is configured to transmit the control signal and isolate the radio frequency signal.

13. The relay according to claim 12, wherein the second control signal end (M2) comprises a second gain control signal end (UART2) and a second transmit/receive control signal end (TX-EN2), the second gain control signal end (UART2) is coupled to the first power amplifier (PA1), and the second transmit/receive control signal end (TX-EN2) is separately coupled to the first path (L1) and the second path (L2).

14. The relay according to claim 13, wherein the fifth branch (5) further comprises a second controller (65) and a first frequency band block circuit (71);

the first frequency band block circuit (71) is coupled between the second transmit/receive control signal end (TX-EN2) and a second node (P2), and the second node (P2) is coupled to the second radio frequency isolation circuit (22); and

the second controller (65) is configured to output a second gain control signal (uart2) to the second gain control signal end (UART2) after receiving a transmit/receive control signal (tx-en) of the second transmit/receive control signal end (TX-EN2) and the control signal of the second node (P2).

15. The relay according to claim 14, wherein an output end of the second controller (65) is coupled to the second gain control signal end (UART2), and an input end of the second controller (65) is coupled to the second transmit/receive control signal end

(TX-EN2) and the second node (P2).

16. The relay according to claim 14 or 15, wherein the fifth branch (5) further comprises a second frequency band block circuit (72), and the second frequency band block circuit (72) is coupled between the second node (P2) and the second radio frequency isolation circuit (22).

17. The relay according to any one of claims 14 to 16, wherein

the fifth branch (5) further comprises a first signal enhancement circuit (90), and the first signal enhancement circuit (90) is coupled between the second controller (65) and the second node (P2);
and/or
the fifth branch (5) further comprises a second signal enhancement circuit, and the second signal enhancement circuit is coupled between the second controller (65) and the second transmit/receive control signal end (TX-EN2);
and/or
the fifth branch (5) further comprises a third signal enhancement circuit, and the third signal enhancement circuit is coupled between the second node (P2) and the second radio frequency isolation circuit (22).

18. The relay according to any one of claims 14 to 17, wherein the relay further comprises a power detector (99), the power detector (99) is separately coupled to the input end of the second controller (65) and the third combination point (Q3), and the second controller (65) is further configured to receive, before outputting the second gain control signal (uart2) to the second gain control signal end (UART2), a power signal sent by the power detector.

19. The relay according to any one of claims 12 to 18, wherein the second radio frequency isolation circuit (22) comprises a $(1/4+N/2)\lambda$ transmission line (X), a first end of the $(1/4+N/2)\lambda$ transmission line (X) is coupled to the third combination point (Q3), a second end of the $(1/4+N/2)\lambda$ transmission line (X) is coupled to a third node (P3), and the third node (P3) is coupled to the second control signal end (M2); and
$\lambda$ is a wavelength of the radio frequency signal, and N is an integer greater than or equal to 0.

20. The relay according to claim 19, wherein the second radio frequency isolation circuit (22) further comprises a third capacitor (C7) and a fourth capacitor (C8); and
a first end of the third capacitor (C7) and a first end of the fourth capacitor (C8) are both coupled to a reference ground voltage end (GND), and a second end of the third capacitor (C7) and a second end of the fourth capacitor (C8) are both coupled to the third node (P3).

21. The relay according to any one of claims 12 to 20, wherein the second path (L2) comprises a second power amplifier (PA2).

22. The relay according to any one of claims 12 to 21, wherein the relay further comprises a sixth branch (6); and
the sixth branch (6) comprises a second power supply circuit (66), the second power supply circuit (66) is coupled to a fourth combination point (Q4), and the fourth combination point (Q4) is located between the second radio frequency isolation circuit (22) and the second control signal end (M2).

23. The relay according to claim 22, wherein the fourth branch (4) further comprises a second radio frequency transmission circuit (12), and the second radio frequency transmission circuit (12) is coupled between the bidirectional switch circuit (13) and the third combination point (Q3);
and/or

the fourth branch (4) further comprises a third direct current block and alternating current pass circuit (42), and the third direct current block and alternating current pass circuit (42) is coupled between the bidirectional switch circuit (13) and the third combination point (Q3);
and/or
the fifth branch (5) further comprises a fourth direct current block and alternating current pass circuit (52), and the fourth direct current block and alternating current pass circuit (52) is coupled between the second control signal end (M2) and the fourth combination point (Q4);
and/or
the sixth branch (6) further comprises a second direct current pass and alternating current block circuit (32), and the second direct current pass and alternating current block circuit (32) is coupled between the second power supply circuit (66) and the fourth combination point (Q4).

24. A signal transmission system, comprising the T-Box according to any one of claims 1 to 11, a cable, and the relay according to any one of claims 12 to 23, wherein one end of the cable is coupled to the first combination point (Q1) of the T-Box, and the other end of the cable is coupled to the third combination point (Q3) of the relay.

25. A vehicle, comprising an antenna and the signal transmission system according to claim 24, wherein the signal transmission system is coupled to the antenna.

People

Vehicle

Network

Traffic light

V2P

V2V

V2I

V2N

Cloud server

Vehicle

FIG. 1

100

Antenna

Cable

Relay

V2X circuit

T-Box

FIG. 2

T-Box

Control signal

Radio frequency signal

2    M1

First radio frequency isolation circuit 21

1    V2X circuit 61

5.9 GHz

First radio frequency transmission circuit 11

Q1

Connector 80

FIG. 3

T-Box

Control signal

Radio frequency signal

Power supply current

Connector 80

First radio frequency isolation circuit 21

Q2

Q1

First direct current pass and alternating current block circuit 31

Second direct current block and alternating current pass circuit 51

First direct current block and alternating current pass circuit 41

First power supply circuit 63

First radio frequency transmission circuit 11

M1

V2X circuit 61

5.9 GHz

FIG. 4

FIG. 5

T-Box

→ Control signal

--→ Radio frequency signal

·····→ Power supply current

First power supply circuit 63 — 31 — L

M1 — C2 — Q2 — 51

C3 — P1 — C4 — GND

X — 21

V2X circuit 61 — 5.9 GHz — Bandpass filter — C1 — Q1 — Connector 80

11 — 41

FIG. 6

$Z_I$ | Transmission line of a specific length |

Characteristic impedance $Z_0$

$Z_L$

GND

FIG. 7A

Gain (dB)

5.9 GHz

Frequency (GHz)

FIG. 7B

FIG. 7C

FIG. 8

FIG. 9

FIG. 10

FIG. 11

Control signal
Radio frequency signal
Power supply current

T-Box

FIG. 12

Voltage

3.3 V

Carrier circuit 64

0 V

3.3 V

TX-EN1

0 V

3.3 V

UART1

0 V

3.3 V

Modulated signal

0 V

Time

FIG. 13

Relay

←—— Control signal

←---→ Radio frequency signal

5  M2

Second radio frequency isolation circuit 22

L1

PA1

4  V2X

5.9 GHz

PA2

L2

Second radio frequency transmission circuit 12

Q3

Connector 80

Bidirectional switch circuit 13

FIG. 14

FIG. 15

EP 4 708 710 A1

Control signal

‑ ‑ ‑ ► Radio frequency signal

uart1+tx-en

Second controller 65

tx-en

First low-pass filter

P2

Second low-pass filter

uart1+tx-en+clk

uart1+tx-en

TX-EN2

71

72

UAR2

Second radio frequency isolation circuit 22

uart2

V2X

PA1

Second radio frequency transmission circuit 12

Connector 80

5.9 GHz

Q3

PA2

Bidirectional switch circuit 13

FIG. 16

EP 4 708 710 A1

FIG. 17

FIG. 18

FIG. 19

FIG. 20A

FIG. 20B

## INTERNATIONAL SEARCH REPORT

| International application No. |
|---|
| **PCT/CN2024/079649** |

| A. | CLASSIFICATION OF SUBJECT MATTER |
|---|---|

H04B1/525(2015.01)i; H04B7/15(2006.01)i

According to International Patent Classification (IPC) or to both national classification and IPC

| B. | FIELDS SEARCHED |
|---|---|

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNTXT, ENTXT, ENTXTC, VEN: 车载通信终端, 车载通讯终端, 车联网, 中继, 导通, 隔离, 合路, 兼容, 适配, 双, 开关, 控制, 射频, 补偿, 放大, 增益, telematics, box, T-Box, v2?, relay, conduct, isolate, combine, compatible, double, switch, SPDT, DPDT, control, RF, AGC

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 116095634 A (SHANGHAI MOBILETEK COMMUNICATION LTD.) 09 May 2023 (2023-05-09) <br> description, paragraphs [0020]-[0050] | 1-25 |
| A | CN 113992234 A (ZHIDAO NETWORK TECHNOLOGY (BEIJING) CO., LTD.) 28 January 2022 (2022-01-28) <br> entire document | 1-25 |
| A | CN 114421991 A (FLAIRCOMM MICROELECTRONICS, INC.) 29 April 2022 (2022-04-29) <br> entire document | 1-25 |
| A | CN 112805938 A (HUAWEI TECHNOLOGIES CO., LTD.) 14 May 2021 (2021-05-14) <br> entire document | 1-25 |
| A | US 2020150742 A1 (MEDIATEK SINGAPORE PTE. LTD.) 14 May 2020 (2020-05-14) <br> entire document | 1-25 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 April 2024** | **12 May 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/079649**

| Patent document cited in search report | | | Publication date (day/month/year) | Patent family member(s) | | | Publication date (day/month/year) |
|---|---|---|---|---|---|---|---|
| CN | 116095634 | A | 09 May 2023 | CN | 116095634 | B | 02 April 2024 |
| CN | 113992234 | A | 28 January 2022 | CN | 113992234 | B | 25 March 2022 |
| CN | 114421991 | A | 29 April 2022 | CN | 217037178 | U | 22 July 2022 |
| CN | 112805938 | A | 14 May 2021 | WO | 2020118585 | A1 | 18 June 2020 |
| | | | | CN | 112805938 | B | 25 November 2022 |
| US | 2020150742 | A1 | 14 May 2020 | US | 11112850 | B2 | 07 September 2021 |
| | | | | TW | 202017769 | A | 16 May 2020 |
| | | | | TWI | 703061 | B | 01 September 2020 |
| | | | | CN | 111169412 | A | 19 May 2020 |
| | | | | CN | 111169412 | B | 10 January 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310704285